# FASCICULE DE BREVET EUROPEEN

(11) **EP 2 327 911 B1**
(45) Date de publication et mention de la délivrance du brevet: **09.05.2012**
(21) Numéro de dépôt: 11001605.2
(22) Date de dépôt: 03.07.2009
(51) Int. Cl.: F16K 11/16, F16K 11/24, F16K 15/18

(54) **Vanne électro-hydraulique à levée de bille pour centrale hydraulique de moteur à taux de compression variable**
Elektrohydraulisches Ventil mit abhebbarer Ventilkugel für Verbrennungsmotor mit variablem Verdichtungsverhältnis
Electro-hydraulic valve with ball lifting for variable compression ratio engine hydraulic unit

(30) Priorité: 03.07.2008 FR 0803759; 03.07.2008 US 78047 P
(43) Date de publication de la demande: 01.06.2011
(62) Demande divisionnaire de: 09772668.1
(73) Titulaire: Rabhi, Vianney, 69006 Lyon (FR)
(72) Inventeur: Rabhi, Vianney, 69006 Lyon (FR)
(74) Mandataire: Schmitt, John

(56) Documents cités:
- DE-A1-102005 010 098
- DE-U1- 8 904 569
- FR-A- 997 725
- FR-A- 2 919 022
- US-A- 2 882 930
- US-A- 5 165 368
- US-A- 5 454 399
- US-A1- 2002 129 855
- US-A1- 2004 057 840
- US-A1- 2007 025 863

## Description

La présente invention est relative à une vanne électro-hydraulique à levée de bille pour une centrale hydraulique d'un moteur à taux de compression variable.

La vanne électro-hydraulique suivant la présente invention comprend :
- Au moins deux billes ou clapets reposant chacun(e) sur un siège pour obturer chacun(e) un conduit, le premier conduit reliant un circuit haute pression (HP) de la centrale hydraulique à l'un des étages d'un amplificateur de pression multi-étagé que comporte ladite centrale, tandis que le deuxième conduit relie un circuit basse pression (LP) de ladite centrale audit étage, lesdites billes fonctionnant comme un clapet anti-retour lorsqu'elle sont maintenues sur leur siège par un ressort pour laisser l'huile contenue dans ledit étage aller vers le circuit haute pression (HP) de ladite centrale mais non en revenir, et pour laisser l'huile en provenance du circuit basse pression (LP) de ladite centrale entrer dans ledit étage mais non en ressortir,
- Et des moyens de levage permettant de soulever les billes ou clapet de leur siège pour laisser ladite huile à la fois entrer et sortir dudit étage de l'amplificateur de pression multi-étagé, lesdits moyens de levage étant constitués d'actionneurs électromécaniques de levage permettant chacun de lever une bille, lesdits actionneurs pouvant tirer ou pousser un poussoir cylindrique permettant de lever ladite bille, lorsque son extrémité entre en contact puis soulève ladite bille, lesdits actionneurs électromécaniques de levage comportant une première ventouse électromagnétique permettant de lever la bille sur une petite hauteur, et une deuxième ventouse électromagnétique permettant de lever ladite bille sur une hauteur plus élevée.

On connaît, d'après les brevets internationaux WO98/51911, WO00/31377, WO03/008783 appartenant au demandeur, différents dispositifs mécaniques pour moteur à cylindrée variable.

On remarque que le brevet international WO98/51911 au nom du demandeur décrit un dispositif servant à améliorer le rendement des moteurs à combustion interne à pistons utilisés à charge et régime variables par adaptation en marche de leur cylindrée effective et/ou de leur rapport volumétrique. Ce type de moteur étant connu de l'homme de l'art sous la dénomination de « moteur à taux de compression variable », cette dénomination sera retenue dans le texte qui suit.

On constate que selon le brevet international WO00/31377 au nom du demandeur, le dispositif de transmission mécanique pour moteur à taux de compression variable comprend un piston solidaire dans sa partie inférieure d'un organe de transmission coopérant d'une part avec un dispositif de guidage à roulement, et d'autre part avec une roue dentée solidaire d'une bielle permettant de réaliser la transmission du mouvement entre ledit piston et ladite bielle.

On note que selon le brevet international WO03/008783 au nom du demandeur le dispositif de transmission mécanique pour moteur à taux de compression variable comprend au moins un cylindre dans lequel se déplace un piston qui est solidaire, dans sa partie inférieure, d'un organe de transmission coopérant d'une part au moyen d'une crémaillère de faible dimension avec un dispositif de guidage à roulement, et d'autre part au moyen d'une autre crémaillère de forte dimension avec une roue dentée solidaire d'une bielle. Ledit dispositif de transmission mécanique pour moteur à taux de compression variable comprend également au moins une crémaillère de commande coopérant avec la roue dentée, des moyens de fixation du piston sur l'organe de transmission qui offrent une précontrainte de serrage, des moyens de liaison qui permettent de rigidifier les dents des crémaillères, et des moyens de renforcement et d'allègement de la structure de la roue dentée.

On note que le jeu minimal de fonctionnement entre les dentures des crémaillères de forte dimension et celles de la roue dentée est fixé par la localisation de surfaces de roulement réalisées sur lesdites crémaillères de forte dimension et ladite roue dentée.

On note que selon la demande de brevet français FR 2 896 539 ou internationale WO 2007/085739 le moteur à taux de compression variable possède au moins un vérin presseur qui permet aux surfaces de roulement de rester en permanence en contact entre elles afin de maîtriser les émissions acoustiques dudit moteur et d'augmenter les tolérances de fabrication de son carter cylindres.

On note également que selon les brevets WO98/51911 et FR 2 896 539, la position verticale de la crémaillère de commande du moteur à taux de compression variable est contrôlée par un vérin de commande qui comporte une entrée de fluide hydraulique sous pression prévue pour compenser d'éventuelles fuites dudit vérin de commande, et pour assurer une pression de pré charge visant à augmenter la précision de maintien de la consigne en position verticale dudit vérin de commande en réduisant les effets de la compressibilité de l'huile, et visant à éviter tout phénomène de cavitation à l'intérieur des chambres dudit vérin.

On note que le moteur à taux de compression variable possède autant de vérins presseurs et de vérins de commande qu'il possède de cylindres.

Comme revendiqué dans la demande de brevet français FR 2 896 539 ou internationale WO 2007/085739 au nom du demandeur, le moteur à taux de compression variable comporte une centrale hydraulique prévue d'une part, pour fournir à son ou ses vérin(s) presseur(s) la pression hydraulique nécessaire à leur fonctionnement, et d'autre part, pour fournir à son ou ses vérin(s) de commande la pression hydraulique nécessaire à la compensation de leurs éventuelles fuites hydrauliques et à l'augmentation de leur précision.

On remarque, selon la demande de brevet français FR 2 896 539 ou internationale WO 2007/085739 au nom du demandeur, que la pression hydraulique fournie au vérin de commande peut également servir à augmenter la vitesse de déplacement dudit vérin de commande lors des manoeuvres visant à augmenter le rapport volumétrique du moteur à taux de compression variable. Selon cette dernière variante, ladite pression hydraulique est appliquée sur la face supérieure de la tige supérieure du vérin de commande au moyen d'une chambre aménagée dans la culasse dudit vérin.

On note dans la demande de brevet français FR 07/05237 au nom du demandeur, que la centrale hydraulique comprend un accumulateur de pression d'huile à air comprimé relié d'une part à l'entrée d'un amplificateur de pression multi-étagé comprenant au moins un étage et dont la pression de sortie s'applique au(x) vérin(s) presseur(s) dudit moteur, ladite pression de sortie étant pilotée par au moins une électrovanne de sélection d'étage, et relié d'autre part au(x) vérin(s) de commande dudit moteur.

On voit que l'amplificateur de pression multi-étagé comporte un carter d'amplificateur multi-étagé, et un piston multi-étagé coopérant, d'une part avec au moins un cylindre émetteur aménagé dans ledit carter qui communique soit avec le circuit de lubrification du moteur à taux de compression variable, soit avec le réservoir d'huile mis sous pression par la réserve d'air sous pression de ladite centrale, et d'autre part avec un cylindre récepteur qui communique hydrauliquement avec les vérins presseurs dudit moteur.

On observe que l'amplificateur de pression multi-étagé comporte autant d'électrovannes d'étage que d'étages, lesdites électrovannes permettant de mettre en communication chacune leur étage propre, soit avec le circuit de lubrification du moteur à taux de compression variable, dénommé ci-après « circuit basse pression », soit avec le réservoir d'huile maintenu sous pression par la réserve d'air sous pression de ladite centrale, dénommé ci-après « circuit haute pression ». On voit que les électrovannes d'étage de l'amplificateur de pression multi-étagé comportent un tiroir de sélection d'étage permettant de mettre en communication l'une ou l'autre des deux entrées desdites électrovannes d'étage avec leur sortie, lesdites deux entrées ne pouvant pas être simultanément mises en communication avec ladite sortie. On voit également que ledit tiroir est actionné dans une direction en mettant en relation la première extrémité dudit tiroir avec le circuit basse pression de la centrale hydraulique et dans l'autre direction au moyen d'un ressort de rappel qui exerce un effort sur la seconde extrémité dudit tiroir.

Selon ce qui est exposé dans la demande de brevet français FR 07/05237 au nom du demandeur, les électrovannes d'étage de l'amplificateur de pression multi-étagé comportent un petit tiroir d'électrovanne de sélection d'étage mû par le champ électromagnétique produit non simultanément par deux bobines, la première bobine servant à pousser ledit petit tiroir, tandis que la deuxième sert à le tirer. On remarque que ledit petit tiroir - qui peut être maintenu en position lorsqu'il atteint l'une ou l'autre des extrémités de sa course par un dispositif de verrouillage - permet de mettre en relation la première extrémité du tiroir de sélection d'étage soit avec le circuit basse pression de la centrale hydraulique, soit à l'air libre.

On note que le tiroir de sélection d'étage coopère avec un clapet de décharge reliant le cylindre émetteur de son étage propre avec le circuit haute pression, ledit clapet de décharge permettant à l'huile d'aller dudit cylindre émetteur audit circuit lorsque la pression régnant dans ledit cylindre émetteur dépasse celle dudit circuit d'une certaine valeur.

On constate aussi que la centrale hydraulique comporte au moins une pompe à huile à haute pression entraînée par le moteur à taux de compression variable, l'alimentation en huile de ladite centrale hydraulique par ladite pompe à huile étant commandée par une électrovanne de pompe à huile haute pression.

On remarque que la centrale hydraulique comporte également une rampe commune de réapprovisionnement permettant de présélectionner la destination de l'huile en provenance de la pompe à huile haute pression, ladite rampe comprenant une entrée et au moins une sortie, et comportant autant d'électrovannes de réapprovisionnement que de sorties, lesdites électrovannes de réapprovisionnement comportant une entrée et une sortie.

On voit que la centrale hydraulique pour moteur à taux de compression variable comporte aussi un dispositif de sélection de la pression d'entrée des vérins de commande qui comprend un tiroir de sélection à deux positions permettant de mettre en communication l'une ou l'autre de ses deux entrées avec sa sortie, la première position permettant de mettre en communication de pression le circuit relié au(x) vérin(s) de commande dudit moteur avec le circuit haute pression de ladite centrale, tandis que la deuxième position permet de mettre en communication de pression le circuit relié au(x) vérin(s) de commande dudit moteur avec le circuit basse pression de ladite centrale.

Selon un mode particulier de réalisation, il est exposé dans la demande de brevet français FR 07/05237 au nom du demandeur, que les électrovannes de réapprovisionnement de la rampe commune de réapprovisionnement comprennent un petit tiroir de réapprovisionnement mû par le champ électromagnétique pouvant être non simultanément produit par deux bobines, la première bobine servant à pousser ledit petit tiroir, tandis que la deuxième sert à le tirer, ledit petit tiroir étant maintenu en position lorsqu'il atteint l'une ou l'autre des extrémités de sa course par un dispositif de verrouillage.

La vanne électro-hydraulique à levée de billes pour centrale hydraulique de moteur à taux de compression variable selon l'invention est conçue pour résoudre un ensemble de problèmes liés à la centrale hydraulique pour moteur à taux de compression variable telle que décrite dans les divers demandes de brevets et brevets d'invention au nom du demandeur auxquels il vient d'être fait référence et parmi lesquels :
- Les différents tiroirs que comporte la centrale hydraulique et particulièrement les tiroirs de sélection d'étage et leur petit tiroir d'électrovanne de sélection d'étage, sont utilisés pour ouvrir ou fermer des conduits dans lesquels circule de l'huile en provenance du circuit de lubrification du moteur à taux de compression variable. Comme ladite huile comporte des impuretés et particules diverses, il est impossible de réaliser des jeux faibles entre lesdits tiroirs et le logement cylindrique dans lequel ils se déplacent, de tels jeux pouvant conduire au grippage ou au coincement desdits tiroirs dans leur dit logement lorsque une impureté vient se loger entre lesdits tiroirs et leur logement. Cette impossibilité conduit à prévoir des jeux de fonctionnement importants entre lesdits tiroirs et leur logement, lesdits jeux engendrant des débits de fuite importants et lesdits débits occasionnant une perte énergétique importante qui pénalise le bilan énergétique total du moteur à taux de compression variable.
- Le clapet de décharge qui relie le cylindre émetteur de chaque étage de l'amplificateur de pression multi-étagé avec le circuit haute pression de la centrale hydraulique représente une complexification dudit amplificateur et une augmentation de son prix.
- Du fait des variations rapides et cycliques de position du piston multi-étagé par rapport au carter d'amplificateur multi-étagé, il existe un risque de cavitation pouvant survenir dans les cylindres émetteurs aménagés dans ledit carter lorsque le ou les tiroirs de sélection d'étage sont dans une position intermédiaire lors de leurs manoeuvres en translation et qu'ils obstruent un court instant, mais simultanément, leurs deux entrées.
- Il subsiste le risque d'une impossibilité de manoeuvrer les tiroirs de sélection d'étage du fait de la faible pression disponible dans le circuit de lubrification du moteur à taux de compression variable dit « circuit basse pression », ladite pression étant utilisée pour pousser lesdits tiroirs par l'une de leur extrémité tandis qu'ils sont rappelés par un ressort qui applique un effort sur leur extrémité opposée. Cette impossibilité peut survenir du fait d'impuretés en suspension dans l'huile constituant un frein au déplacement dudit tiroir, ou bien d'une viscosité importante de l'huile due à un démarrage du moteur à taux de compression variable par temps froid.
- La précision requise pour réaliser les tiroirs de la centrale hydraulique selon l'art antérieur est importante et augmente le prix de revient en fabrication de ladite centrale. Par ailleurs, du fait du jeu minimal requis entre lesdits tiroirs et le logement cylindrique dans lequel ils se déplacent, cette précision n'est pas en mesure d'assurer une parfaite étanchéité malgré son prix de revient élevé.

C'est pour résoudre ces différents problèmes liés à la centrale hydraulique pour moteur à taux de compression variable et au mode de fonctionnement de ladite centrale telle que décrit dans les demandes de brevets et brevets d'invention au nom du demandeur cités en référence, que la vanne électro-hydraulique à levée de bille pour centrale hydraulique de moteur à taux de compression variable selon l'invention prévoit:
- La suppression de tout risque de blocage du fonctionnement de la centrale hydraulique dû au possible coincement de ses tiroirs lorsqu'ils se déplacent en translation dans leur logement ;
- L'augmentation de l'étanchéité de ladite centrale, avec une amélioration de l'efficacité énergétique totale du moteur à taux de compression variable induite par la réduction du débit de fuite d'huile sous pression, que celle-ci provienne du circuit haute pression ou basse pression ;
- La réduction voire l'élimination de tout risque de cavitation dans les cylindres émetteurs aménagés dans le carter d'amplificateur multi-étagé ;
- La simplification de ladite centrale, notamment par la suppression des clapets de décharge que comporte l'amplificateur multi-étagé et qui relient chaque cylindre émetteur avec le circuit haute pression ;
- La réduction du prix de revient total de ladite centrale, avec des pièces plus simples à produire en grande série ;
- L'augmentation de la fiabilité générale de ladite centrale.

La vanne électro-hydraulique à levée de bille pour centrale hydraulique de moteur à taux de compression variable, suivant la présente invention comprend :
- Au moins deux billes ou clapets reposant chacun(e) sur un siège pour obturer chacun(e) un conduit, le premier conduit reliant un circuit haute pression (HP) de la centrale hydraulique à l'un des étages d'un amplificateur de pression multi-étagé que comporte ladite centrale, tandis que le deuxième conduit relie un circuit basse pression (LP) de ladite centrale audit étage, lesdites billes fonctionnant comme un clapet anti-retour lorsqu'elle sont maintenues sur leur siège par un ressort pour laisser l'huile contenue dans ledit étage aller vers le circuit haute pression (HP) de ladite centrale mais non en revenir, et pour laisser l'huile en provenance du circuit basse pression (LP) de ladite centrale entrer dans ledit étage mais non en ressortir,
- Et des moyens de levage permettant de soulever les billes ou clapet de leur siège pour laisser ladite huile à la fois entrer et sortir dudit étage de l'amplificateur de pression multi-étagé, lesdits moyens de levage étant constitués d'actionneurs électromécaniques de levage permettant chacun de lever une bille, lesdits actionneurs pouvant tirer ou pousser un poussoir cylindrique permettant de lever ladite bille, lorsque son extrémité entre en contact puis soulève ladite bille, lesdits actionneurs électromécaniques de levage comportant une première ventouse électromagnétique permettant de lever la bille sur une petite hauteur, et une deuxième ventouse électromagnétique permettant de lever ladite bille sur une hauteur plus élevée.

La vanne électro-hydraulique à levée de bille pour centrale hydraulique de moteur à taux de compression variable, suivant la présente invention comprend des actionneurs électromécaniques de levage qui sont constitués d'au moins une ventouse électromagnétique comportant un bobinage et une cage fixée directement ou indirectement sur l'amplificateur de pression multi-étagé de la centrale hydraulique, ledit bobinage servant à créer un champ magnétique permettant d'attirer une palette métallique de poussoir poussant le poussoir cylindrique quand ledit bobinage est traversé par un courant électrique.

La vanne électro-hydraulique à levée de bille pour centrale hydraulique de moteur à taux de compression variable, suivant la présente invention comprend une première ventouse électromagnétique de l'actionneur électromécanique qui est constituée d'un bobinage et d'une cage métallique qui peut être fixée sur une palette métallique support, ladite palette métallique support pouvant se déplacer en direction de la bille mais étant arrêtée dans la direction opposée par un dispositif de réglage de deuxième ventouse solidaire directement ou indirectement de l'amplificateur de pression multi-étagé de la centrale hydraulique.

La vanne électro-hydraulique à levée de bille pour centrale hydraulique de moteur à taux de compression variable, suivant la présente invention comprend une deuxième ventouse électromagnétique de l'actionneur électromécanique qui est constituée d'un bobinage et d'une cage métallique fixée directement ou indirectement sur l'amplificateur de pression multi-étagé de la centrale hydraulique, ledit bobinage servant à créer un champ magnétique de manière à attirer la palette métallique support de la première ventouse électromagnétique lorsque ledit bobinage de ladite deuxième ventouse électromagnétique est traversé par un courant électrique.

La vanne électro-hydraulique à levée de bille pour centrale hydraulique de moteur à taux de compression variable, suivant la présente invention comprend une distance maximale entre une palette métallique de poussoir solidaire ou en contact avec le poussoir cylindrique d'une part, et la cage métallique de la première ventouse électromagnétique d'autre part, peut être réglée au moyen d'un dispositif de réglage de première ventouse de manière à régler la petite hauteur de levée de la bille.

La vanne électro-hydraulique à levée de bille pour centrale hydraulique de moteur à taux de compression variable, suivant la présente invention comprend un dispositif de réglage de première ventouse électromagnétique qui consiste en un filetage permettant de régler la position d'une butée de poussoir solidaire directement ou indirectement de l'amplificateur de pression multi-étagé de la centrale hydraulique et sur laquelle prend appui la palette métallique de poussoir par rapport à la position de la cage métallique, ledit filetage pouvant être arrêté en rotation par des moyens de blocage.

La vanne électro-hydraulique à levée de bille pour centrale hydraulique de moteur à taux de compression variable, suivant la présente invention comprend une distance maximale entre la palette métallique support de la première ventouse électromagnétique et la cage métallique de la deuxième ventouse électromagnétique peut être réglée au moyen d'un dispositif de réglage de deuxième ventouse, de manière à régler la grande hauteur de levée de la bille.

La vanne électro-hydraulique à levée de bille pour centrale hydraulique de moteur à taux de compression variable, suivant la présente invention comprend un dispositif de réglage de la deuxième ventouse qui consiste en un filetage permettant de régler la position de la butée de la palette métallique support par rapport à la position de la cage métallique de la deuxième ventouse électromagnétique, ledit filetage pouvant être arrêté en rotation par des moyens de blocage.

La vanne électro-hydraulique à levée de bille pour centrale hydraulique de moteur à taux de compression variable, suivant la présente invention comprend un dispositif de réglage de la garde à la bille qui consiste en un filetage aménagé directement ou indirectement dans l'amplificateur de pression multi-étagé de la centrale hydraulique et permettant de régler la position de la butée de poussoir par rapport à celle du siège de la bille.

La vanne électro-hydraulique à levée de bille pour centrale hydraulique de moteur à taux de compression variable, suivant la présente invention comprend un dispositif de réglage de la garde à la bille consiste en un filetage aménagé directement ou indirectement dans l'amplificateur de pression multi-étagé de la centrale hydraulique, permettant de régler la position de la butée de poussoir par rapport à celle du siège de la bille, ledit filetage pouvant être arrêté en rotation par des moyens de blocage.

La vanne électro-hydraulique à levée de bille pour centrale hydraulique de moteur à taux de compression variable, suivant la présente invention comprend des actionneurs électromécaniques de levage qui sont constitués d'une première ventouse électromagnétique et d'une deuxième ventouse électromagnétique fixées solidairement au carter de l'amplificateur de pression multi-étagé, ladite première ventouse pouvant attirer une palette libre de petite levée venant en contact avec le poussoir cylindrique, tandis que la deuxième ventouse électromagnétique permet d'attirer une palette de grande levée solidaire dudit poussoir.

La vanne électro-hydraulique à levée de bille pour centrale hydraulique de moteur à taux de compression variable, suivant la présente invention comprend des ventouses électromagnétiques de petite levée et de grande levée qui sont rendues solidaires du carter de l'amplificateur de pression multi-étagé, par un fourreau cylindrique dans lequel elles sont logées, ledit fourreau étant fixé sur ledit carter de l'amplificateur de pression multi-étagé.

La vanne électro-hydraulique à levée de bille pour centrale hydraulique de moteur à taux de compression variable, suivant la présente invention comprend une palette libre de petite levée qui comporte un ressort de rappel.

La vanne électro-hydraulique à levée de bille pour centrale hydraulique de moteur à taux de compression variable, suivant la présente invention comprend une palette de grande levée solidaire du poussoir cylindrique qui comporte un ressort de rappel.

La vanne électro-hydraulique à levée de bille pour centrale hydraulique de moteur à taux de compression variable, suivant la présente invention comprend une ventouse électromagnétique de petite levée qui comporte des moyens de réglage permettant de régler la hauteur de la petite levée du poussoir cylindrique.

La vanne électro-hydraulique à levée de bille pour centrale hydraulique de moteur à taux de compression variable, suivant la présente invention comprend une ventouse électromagnétique de grande levée qui comporte des moyens de réglage permettant de régler la hauteur de la grande levée du poussoir cylindrique.

La vanne électro-hydraulique à levée de bille pour centrale hydraulique de moteur à taux de compression variable, suivant la présente invention comprend un fourreau cylindrique qui comporte des moyens de réglage permettant de régler la distance entre le poussoir cylindrique et la bille lorsque aucune des ventouses électromagnétiques n'est alimentée en courant électrique.

La description qui va suivre au regard des dessins annexés, donnés à titre d'exemples non limitatifs, permettra de mieux comprendre l'invention, les caractéristiques qu'elle présente et les avantages qu'elle est susceptible de procurer :
Figure 1 est une vue en perspective illustrant les principaux composants d'un moteur à taux de compression variable et l'emplacement de la centrale hydraulique pourvue d'une vanne électro-hydraulique à levée de bille suivant la présente invention.
Figures 2 et 3 sont des vues en perspective montrant la centrale hydraulique et la vanne électro-hydraulique à levée de bille suivant la présente invention.
Figures 4 à 7 sont des vues montrant les différentes étapes de fonctionnement d'une vanne électro-hydraulique à levée de bille pour centrale hydraulique dont les moyens de levage sont constitués d'électrovannes de levage ne faisant pas partie de l'objet de la présente invention.
Figure 8 est une vue en perspective illustrant un amplificateur multi-étagé pourvue de vannes électro-hydrauliques à levée de bille pour centrale hydraulique dont les moyens de levage sont constitués d'électrovannes de levage ne faisant pas partie de l'objet de la présente invention.
Figure 9 est une vue en coupe représentant l'amplificateur multiétagé pourvue de vannes électro-hydrauliques à levée de bille pour centrale hydraulique dont les moyens de levage sont constitués d'électrovannes de levage ne faisant pas partie de l'objet de la présente invention.
Figure 10 est une vue en perspective éclatée illustrant l'amplificateur multi-étagé pourvue de vannes électro-hydrauliques à levée de bille pour centrale hydraulique dont les moyens de levage sont constitués d'électrovannes de levage ne faisant pas partie de l'objet de la présente invention.
Figure 11 est une vue en perspective éclatée représentant la vanne électro-hydraulique à levée de bille pour centrale hydraulique appliquée à un dispositif de sélection de la pression d'entrée des vérins de commandes du moteur à taux de compression variable et dont les moyens de levage sont constitués d'électrovannes de levage ne faisant pas partie de l'objet de la présente invention.
Figures 12 à 14 sont des vues représentant une première variante d'exécution de la vanne électro-hydraulique à levée de bille pour centrale hydraulique dont les moyens de levage sont constitués d'actionneur électromécanique de levage suivant la présente invention.
Figures 15 à 17 sont des vues schématiques montrant le principe de fonctionnement de la première variante d'exécution de la vanne électro-hydraulique à levée de bille pour centrale hydraulique dont les moyens de levage sont constitués d'actionneurs électromécaniques de levage suivant la présente invention.
Figures 18 à 20 sont des vues schématiques montrant le principe de fonctionnement d'une seconde variante d'exécution de la vanne étectro-hydraulique à levée de bille pour centrale hydraulique dont les moyens de levage sont constitués d'actionneur électromécanique de levage suivant la présente invention.

### DESCRIPTION DE L'INVENTION :

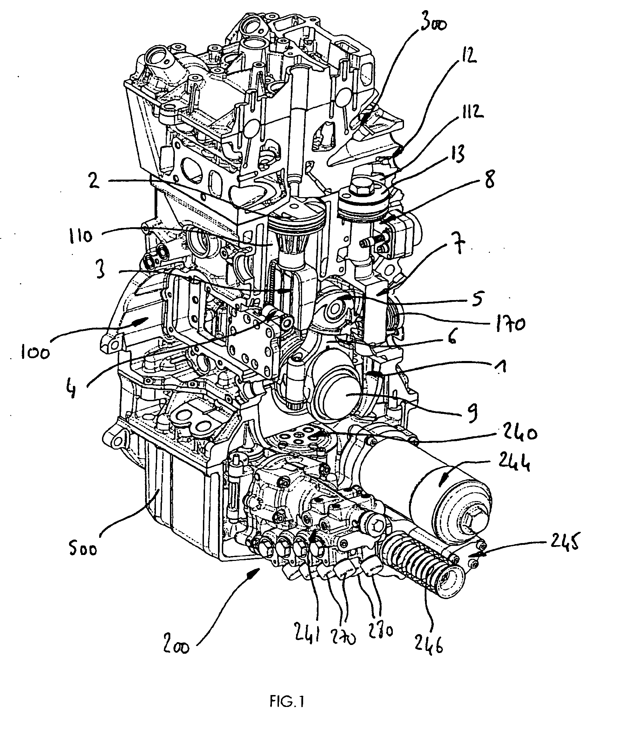

On a montré en figure 1 un bloc moteur ou carter cylindres 100 qui comprend au moins un cylindre 110 dans lequel se déplace un piston de combustion 2 au moyen d'un dispositif de transmission 1 et des moyens de pression 170 qui permettent de maintenir en position les principaux composants mobiles d'un moteur à taux de compression variable.

Le dispositif de transmission mécanique 1 comporte dans la partie inférieure du piston de combustion 2 un organe de transmission ou crémaillère de piston 3 solidaire dudit piston et coopérant, d'une part avec un dispositif de guidage à roulement 4, et d'autre part avec une roue dentée 5.

La roue dentée 5 coopère avec une bielle 6 reliée à un vilebrequin 9 afin de réaliser la transmission du mouvement entre le piston de combustion 2 et ledit vilebrequin.

La roue dentée 5 coopère à l'opposé de l'organe de transmission ou crémaillère de piston 3 avec une autre crémaillère dite crémaillère de commande 7 dont la position verticale par rapport au carter cylindres 100 est pilotée par un dispositif de contrôle 12 comportant un vérin de commande 8, dont le piston de vérin 13 est guidé dans un cylindre de vérin 112 aménagé dans le carter cylindres 100 et fermé dans sa partie supérieure par une culasse de vérin 300.

Le carter cylindres 100 comporte une centrale hydraulique 200 qui est constituée de différents composants autonomes et indépendants pouvant être installés soit à l'intérieur dudit carter cylindres 100, soit en un point quelconque du compartiment moteur du véhicule ou du véhicule lui même.

Selon un mode préféré de réalisation, les différents composants de la centrale hydraulique 200 peuvent être tout ou en partie logés dans le carter d'huile 500 du carter cylindres 100.

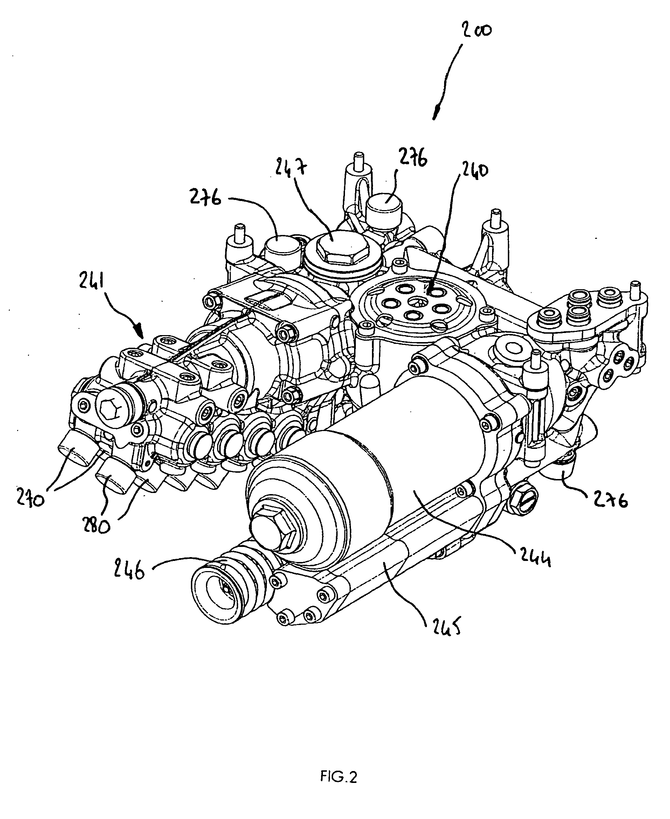

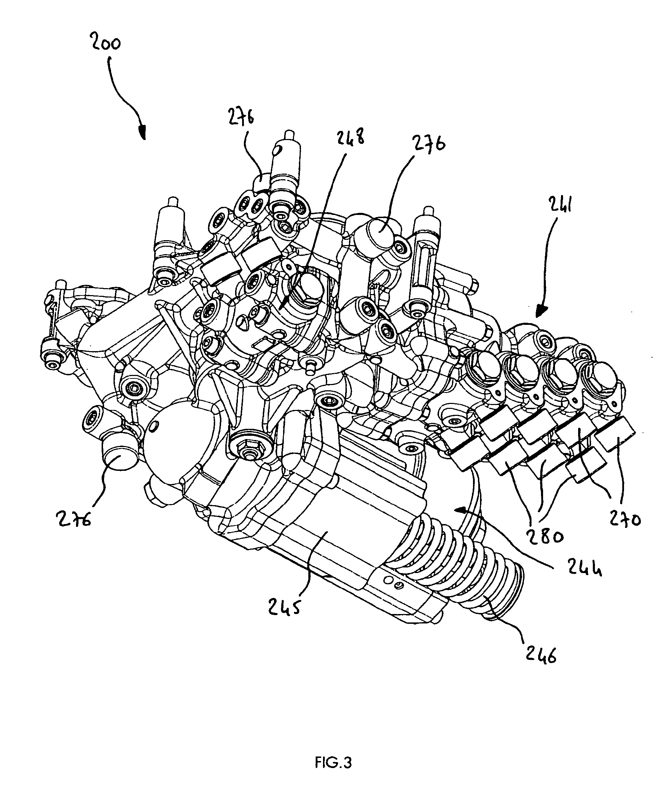

On a représenté en figures 2 et 3 une centrale hydraulique 200 pour moteur à taux de compression variable comprenant un ensemble de composants dont un accumulateur de pression 240 d'huile de lubrification du moteur à taux de compression variable, un amplificateur de pression multi-étagé 241, une réserve d'air sous pression 244, une pompe à air 245 pourvue de son ressort 246, un séparateur de circuit 247 et un dispositif de sélection de la pression d'entrée 248 des vérins de commandes 8 du moteur à taux de compression variable.

Les composants ci-dessus ainsi que d'autres éléments permettant la réalisation de la centrale hydraulique 200 sont largement décrits et détaillés dans la demande de brevet en France FR 07/05237 appartenant au demandeur.

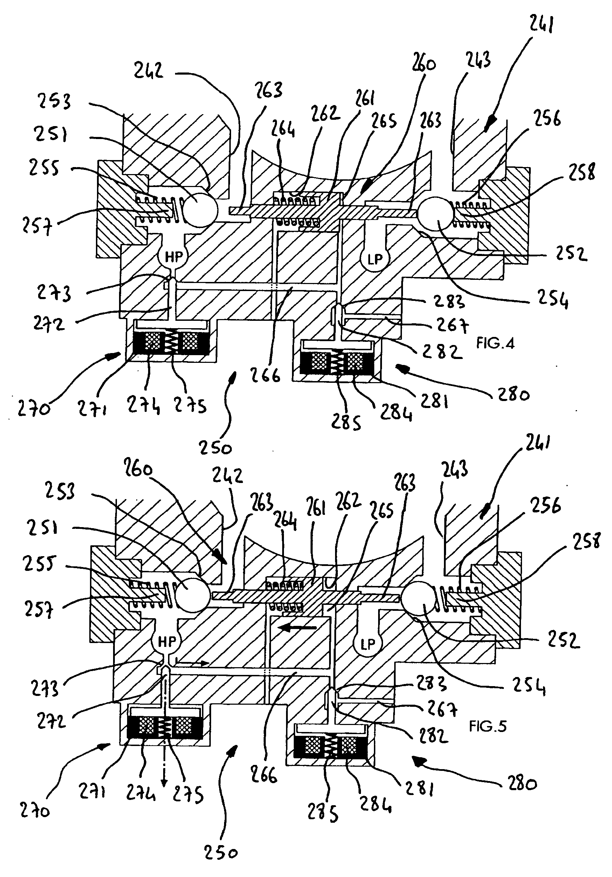

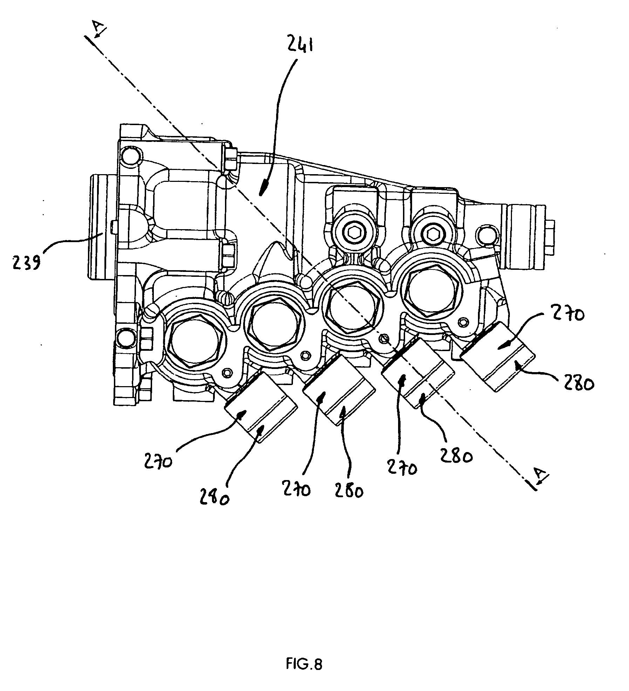

On a illustré en figures 4 à 10 un exemple de réalisation d'une vanne électro-hydraulique 250 à levée de bille pour centrale hydraulique 200 et plus particulièrement pour l'amplificateur de pression multi-étagé 241 du moteur à taux de compression variable.

La vanne électro-hydraulique 250 comprend au moins deux billes 251, 252 ou clapet(s) reposant chacun(e) sur un siège 253, 254 pour obturer chacun(e) un conduit 242, 243 de l'amplificateur de pression multi-étagé 241.

Le premier conduit 242 relie le circuit haute pression (HP) de la centrale hydraulique 200 du moteur à taux de compression variable à l'un des étages de l'amplificateur de pression multi-étagé 241, tandis que le deuxième circuit 243 relie le circuit basse pression (LP) de la centrale hydraulique 200 audit étage.

Les billes 251, 252 fonctionnent comme un clapet anti-retour lorsqu'elle sont maintenues sur leur siège 253, 254 par un ressort 255, 256 pour laisser l'huile contenue dans ledit étage aller vers le circuit haute pression (HP) de ladite centrale hydraulique 200 mais non en revenir, et pour laisser l'huile en provenance du circuit basse pression (LP) de ladite centrale entrer dans ledit étage mais non en ressortir.

Les billes 251, 252 peuvent être soulevées de leurs sièges 253, 254 par des moyens de levage 260 pour laisser l'huile à la fois entrer et sortir dudit étage de l'amplificateur de pression multi-étagé 241.

Les moyens de levage 260 ne peuvent lever qu'une seule bille 251, 252 à la fois, de la vanne électro-hydraulique 250, l'autre bille restant reposée sur son siège.

Les moyens de levage 260 sont constitués d'un piston de levage 261 pouvant se déplacer en translation dans un cylindre 262 situé entre les deux billes 251, 252 et dans l'axe qui relie une bille à l'autre bille.

Le piston de levage 261 soulève l'une ou l'autre bille 251, 252 de son siège 253, 254 lorsqu'il se déplace en direction de ladite bille et qu'il pousse ladite bille par l'intermédiaire d'un poussoir cylindrique 263.

Le piston de levage 261 peut être poussé dans la direction de l'une des deux billes 251 afin de soulever ladite bille de son siège 253 lorsque est appliquée audit piston de levage 261 une pression hydraulique sur sa face opposée à la direction de ladite bille, tandis que ledit piston 261 est poussé dans l'autre direction par un ressort de levage 264 afin de lever l'autre bille 252 de son siège 254 lorsqu'aucune pression hydraulique n'est appliquée audit piston de levage 261.

La pression hydraulique est appliquée au piston de levage 261 par l'intermédiaire d'une chambre de levage 265, ladite chambre pouvant être mise en relation soit avec le circuit haute pression (HP) de la centrale hydraulique 200, soit à l'air libre.

La chambre de levage 265 est mise en relation avec le circuit haute pression (HP) de la centrale hydraulique 200 par l'intermédiaire, d'une électrovanne de levage haute pression 270, placé sur un conduit de levage 266 reliant la chambre de levage 265 au circuit haute pression (HP) de la centrale hydraulique 200, ladite électrovanne 270 pouvant ouvrir ou fermer ledit conduit.

L'électrovanne de levage haute pression 270 est constituée d'une ventouse électromagnétique 271 pouvant lever un pointeau haute pression 272 de son siège 273 lorsqu'une tension électrique est appliquée aux bornes d'un bobinage 274 de ladite ventouse, ledit pointeau 272 étant sinon maintenu en pression sur ledit siège 273 par un ressort 275.

La chambre de levage 265 est mise à l'air libre par l'intermédiaire d'une électrovanne de levage basse pression 280 placée sur un conduit de mise à l'air libre 267, ladite électrovanne pouvant ouvrir ou fermer ledit conduit.

L'électrovanne de levage basse pression 280 est constituée d'une ventouse électromagnétique 281 pouvant lever un pointeau basse pression 282 de son siège 283 lorsqu'une tension électrique est appliquée aux bornes d'un bobinage 284 de ladite ventouse, ledit pointeau 282 étant sinon maintenu en pression sur ledit siège 283 par un ressort 285.

Selon un mode particulier de réalisation de la vanne électro-hydraulique à levée de bille 250 selon l'invention, on note que pour lever la bille 252 placée à l'opposé du ressort de rappel 264 du piston de levage 261, la chambre de levage 265 peut être mise soit à l'air libre en la mettant en relation avec le volume interne du carter cylindres 100 du moteur à taux de compression variable, soit en relation avec le circuit basse pression (LP) de la centrale hydraulique 200.

Le piston de levage 261 comporte un joint d'étanchéité pouvant être en une ou plusieurs parties.

Les poussoirs cylindriques 263 sont munis chacun d'un joint d'étanchéité afin que l'huile contenue dans le circuit basse pression (LP) de la centrale hydraulique 200 ne puisse pas passer dans la chambre de levage 265 ou inversement, et afin que l'huile contenue dans le circuit haute pression (HP) ne puisse pas passer dans la chambre dans laquelle est logé le ressort de levage 264 et inversement.

La chambre dans laquelle est logé le ressort de levage 264 est munie d'un conduit de mise à l'air libre.

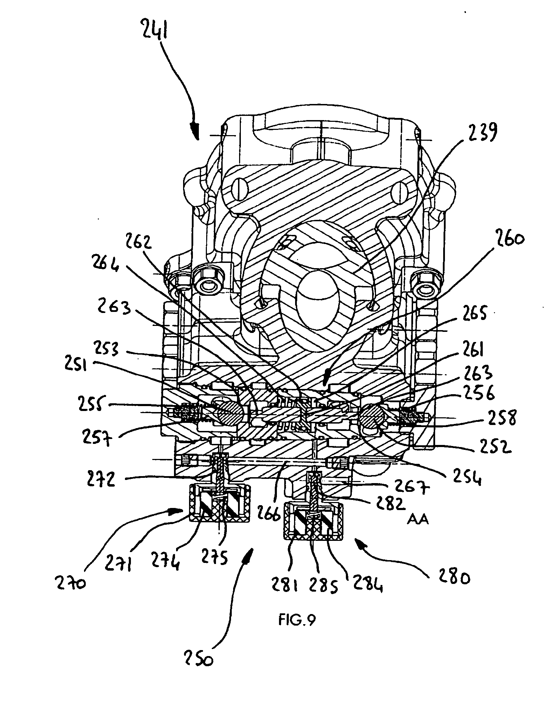

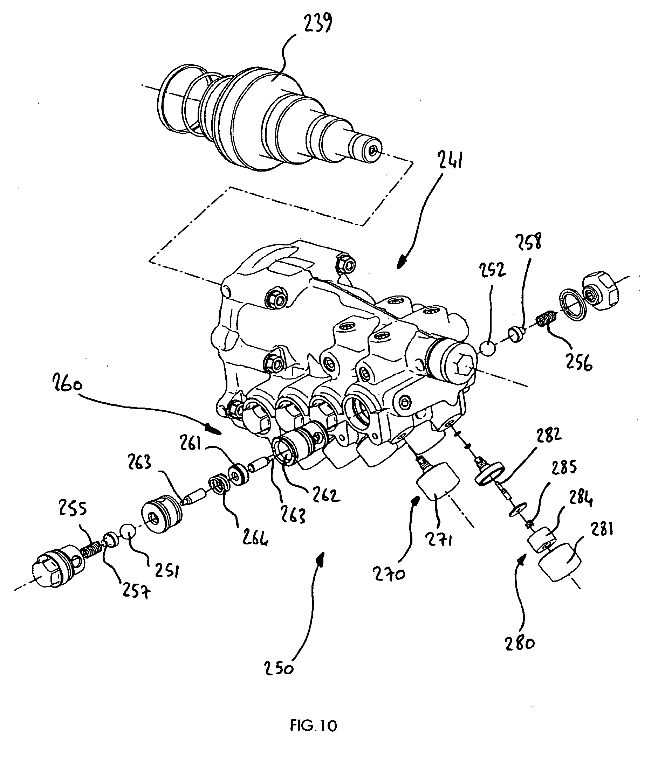

Les différentes chambres dans lesquelles sont logées les billes 251, 252 et leurs ressorts 255, 256 et le cylindre de levage 262 dans lequel est logé le piston de levage 261 sont constitués d'éléments cylindriques empilables permettant le montage de l'ensemble de la vanne électro-hydraulique à levée de bille 250 selon l'invention dans le carter de l'amplificateur multi-étagé 241, lesdits éléments pouvant avoir des diamètres différents afin de permettre le montage de joints toriques qui assurent l'étanchéité entre lesdites éléments et ledit carter et étant maintenus en pression longitudinale par un bouchon de fermeture (figures 9 et 10).

Les billes 251, 252 possèdent une butée de levée maximale 257, 258 pouvant servir de guide pour leur ressort 255, 256.

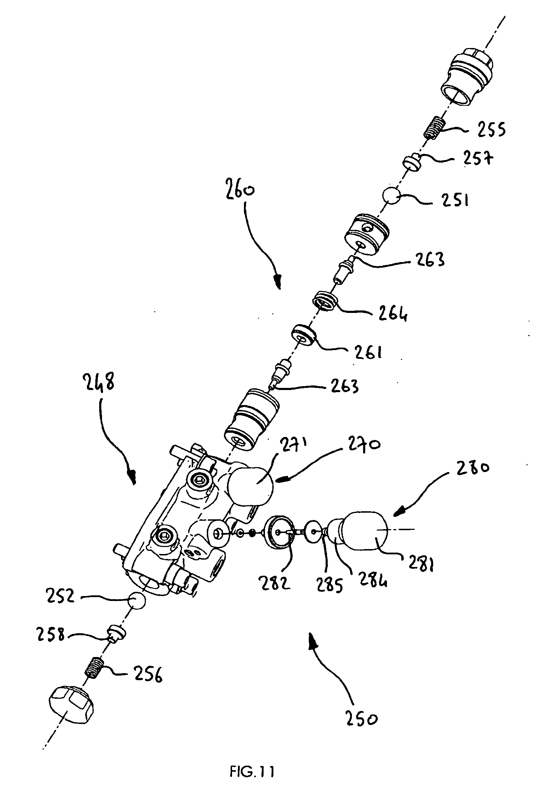

On a représenté en figure 11 à titre d'exemple la vanne électro-hydraulique à levée de bille 250 pour centrale hydraulique 200 appliquée au dispositif de sélection de la pression d'entrée 248 des vérins de commandes 8 du moteur à taux de compression variable.

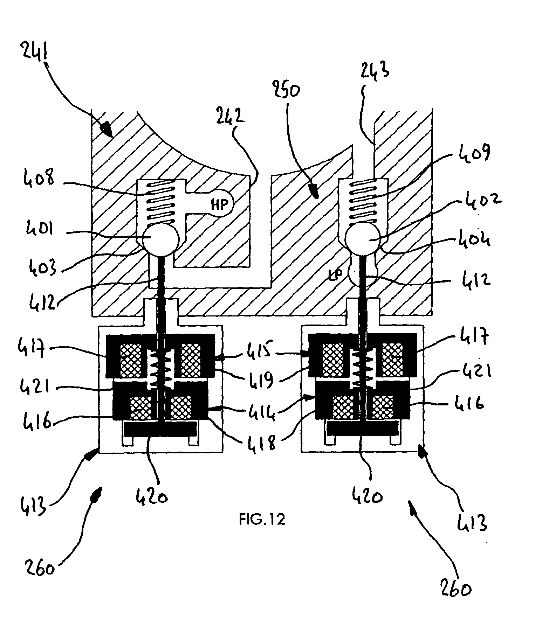

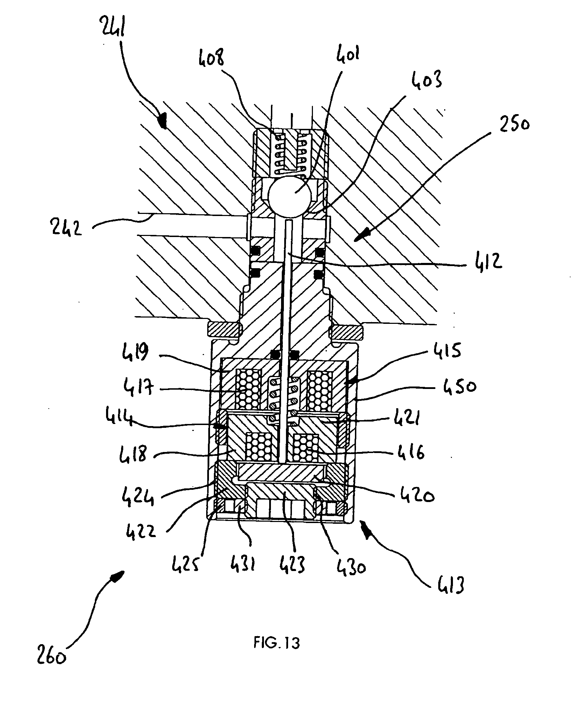

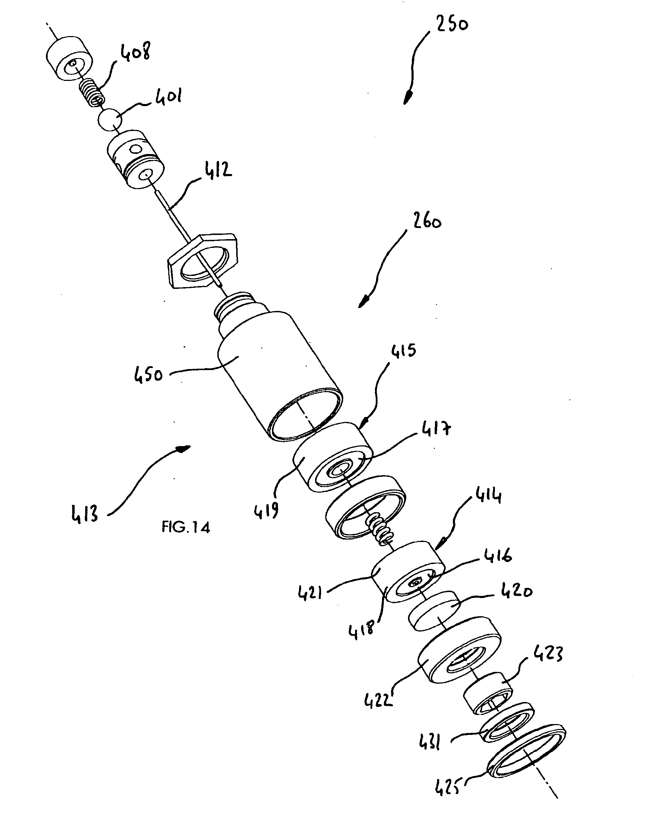

On a montré en figures 12 à 17 une première variante de réalisation des moyens de levage 260 de la vanne électro-hydraulique 250 qui sont constitués d'actionneurs électromécaniques de levage 413 suivant la présente invention.

Les moyens de levage 260 sont constitués d'actionneurs électromécaniques de levage 413 qui chacun peut lever une bille 401, 402 de son siège 403, 404, lesdits actionneurs pouvant tirer ou pousser un poussoir cylindrique 412 et ledit poussoir cylindrique 412 pouvant lever ladite bille lorsque son extrémité entre en contact puis soulève ladite bille.

Ainsi, chaque actionneur électromécanique 413 peut être logé soit directement à l'intérieur de l'amplificateur de pression multi-étagé 241 de la centrale hydraulique 200, soit à l'intérieur d'un corps 450 solidaire dudit amplificateur de pression multi-étagé 241.

Chaque actionneur électromécanique 413 est constitué d'au moins une ventouse électromagnétique 414, 415 comportant un bobinage 416, 417 et une cage 418, 419.

Le bobinage 416 de la première ventouse électromagnétique 414 sert à créer un champ magnétique permettant d'attirer une palette métallique de poussoir 420 poussant le poussoir cylindrique 412 quand ledit bobinage 416 est traversé par un courant électrique.

Selon qu'il soit tiré ou poussé, le poussoir cylindrique 412 de chaque actionneur 413 peut être logé en tout ou partie soit dans le conduit 242, 243 de l'amplificateur de pression multi-étagé 241 soit dans le circuit haute pression (HP) ou base pression (LP) dudit amplificateur de pression multi-étagé 241.

Le poussoir cylindrique 412 de chaque actionneur 413 est arrêté en translation par une butée de poussoir 423 qui est placée dans une direction opposée à celle permettant audit poussoir cylindrique 412 de lever la bille 401, 402.

La distance entre la butée de poussoir 423 et la bille 401, 402 est réglable par l'intermédiaire d'un dispositif de réglage de la garde à la bille afin de permettre de régler le jeu entre le poussoir cylindrique 412 et ladite bille 401, 402 lorsque ledit poussoir cylindrique 412 et/ou la palette métallique de poussoir 420 est en contact avec ladite butée de poussoir 423.

Le dispositif de réglage de la garde à la bille consiste en un filetage aménagé directement ou indirectement dans l'amplificateur de pression multi-étagé 241 de la centrale hydraulique 200 et permettant de régler la position de la butée de poussoir 423 par rapport à celle du siège 403, 404 de la bille 401, 402.

Le filetage formant le dispositif de réglage de la garde à la bille peut être arrêté en rotation par des moyens de blocage.

Il est prévu par exemple, que le poussoir cylindrique 412 puisse être rappelé par un ressort, non représenté, qui tend à l'éloigner de la bille 401, 402.

Chaque actionneur électromécanique 413 comporte d'une part une première ventouse électromagnétique 414 permettant de lever la bille 401, 402 sur une petite hauteur et d'autre part une deuxième ventouse électromagnétique 415 permettant de lever ladite bille 401, 402 sur une hauteur plus élevée.

La première ventouse électromagnétique 414 est constituée d'un bobinage 416 et d'une cage métallique 418 qui peut être fixée sur une palette métallique support 421.

La distance maximale entre la palette métallique de poussoir 420 solidaire ou en contact avec le poussoir cylindrique 412 d'une part, et la cage métallique 418 de la première ventouse électromagnétique 414 d'autre part, peut être réglée au moyen d'un dispositif de réglage de première ventouse 423, 430 de sorte à régler la petite hauteur de levée de la bille 401, 402.

Le dispositif de réglage de première ventouse électromagnétique consiste en un filetage 430 permettant de régler la position de la butée 423 solidaire directement ou indirectement de l'amplificateur de pression multi-étagé 241 de la centrale hydraulique 200 et sur laquelle prend appui la palette métallique de poussoir 420 par rapport à la position de la cage métallique 418, ledit filetage 430 pouvant être arrêté en rotation par des moyens de blocage 431.

La palette métallique support 421 de la première ventouse électromagnétique 414 peut se déplacer en direction de la bille 401, 402.

La distance maximale entre la palette métallique support 421 de la première ventouse électromagnétique 414 et la cage métallique 419 de la deuxième ventouse électromagnétique 415 peut être réglée au moyen d'un dispositif de réglage de deuxième ventouse 422, 424, de manière à régler la grande hauteur de levée de la bille 401, 402.

Le dispositif de réglage de deuxième ventouse consiste en un filetage 424 permettant de régler la position de la butée 422 de la palette métallique support 421 par rapport à la position de la cage métallique 419 de la deuxième ventouse électromagnétique 415, ledit filetage 424 pouvant être arrêté en rotation par des moyens de blocage 425.

Le bobinage 416 de ladite première ventouse 414 sert à créer un champ magnétique permettant d'attirer la palette métallique de poussoir 420, de manière à pousser le poussoir cylindrique 412 quand ledit bobinage 416 est traversé par un courant électrique.

La deuxième ventouse 415 est constituée d'un bobinage 417 et d'une cage métallique 419 qui peut être fixée directement ou indirectement sur l'amplificateur de pression multi-étagé 241 de la centrale hydraulique 200.

Le bobinage 417 de ladite seconde ventouse 415 sert à créer un champ magnétique de manière à attirer la palette métallique support 421 de la première ventouse électromagnétique 414 quand ledit bobinage 417 de ladite deuxième ventouse 415 est traversé par un courant électrique.

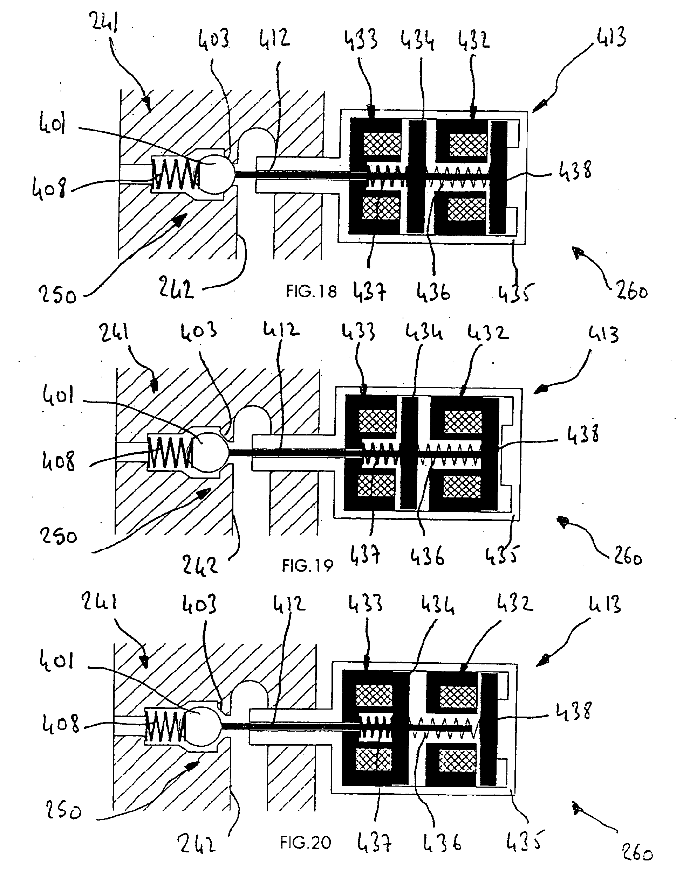

On a montré en figures 18 à 20 une seconde variante de réalisation des moyens de levage 260 de la vanne électro-hydraulique à levée de bille 250 qui sont constitués d'actionneurs électromécaniques de levage 413 suivant la présente invention.

Les moyens de levage 260 sont constitués d'actionneurs électromécaniques de levage 413 qui chacun peut lever une bille 401, 402 de son siège 403, 404, lesdits actionneurs pouvant tirer ou pousser un poussoir cylindrique 412 et ledit poussoir cylindrique 412 pouvant lever ladite bille 401, 402 lorsque son extrémité entre en contact puis soulève ladite bille.

Chaque actionneur électromécanique de levage 413 de la vanne électro-hydraulique à levée de bille 250 est constitué d'une première ventouse électromagnétique 432 et d'une deuxième ventouse électromagnétique 433 fixées à l'amplificateur de pression multi-étagé 241 de la centrale hydraulique 200, ladite première ventouse 432 pouvant attirer une palette libre de petite levée 438 venant en contact avec le poussoir cylindrique 412, tandis que la deuxième ventouse électromagnétique 433 permet d'attirer une palette de grande levée 434 solidaire dudit poussoir.

Les ventouses électromagnétiques de petite et de grande levée 432, 433 sont rendues solidaires de l'amplificateur de pression multi-étagé 241 par un fourreau cylindrique 435 dans lequel elles sont logées, ledit fourreau 435 étant fixé sur l'amplificateur de pression multi-étagé 241.

La palette libre de petite levée 438 comporte un ressort de rappel 436.

La palette de grande levée 434 solidaire du poussoir cylindrique 412 comporte un ressort de rappel 437.

La ventouse électromagnétique de petite levée 432 comporte des moyens de réglage non représentés permettant de régler la hauteur de la petite levée du poussoir cylindrique 412.

La ventouse électromagnétique de grande levée 433 comporte des moyens de réglage non représentés permettant de régler la hauteur de la grande levée du poussoir cylindrique 412.

Le fourreau cylindrique 435 comporte des moyens de réglage non représentés permettant de régler la distance entre le poussoir cylindrique 412 et la bille 401, 402 lorsque aucune des ventouses électromagnétiques 432, 433 n'est alimentée en courant électrique.

On note que selon un mode particulier de réalisation de la centrale hydraulique 200 pour moteur à taux de compression variable, les électrovannes à pointeau 270, 280 et leur ventouse électromagnétique 271, 281 telles que prévues pour la vanne électro-hydraulique à levée de bille 250 selon l'invention peuvent avantageusement remplacer les électrovannes à tiroir que comporte la rampe de réapprovisionnement de la centrale hydraulique 200 telle que décrite dans la demande de brevet français FR 07/05237, afin de bénéficier des mêmes avantages fonctionnels. En ce cas les électrovannes à tiroir de réapprovisionnement de la centrale hydraulique 200 deviennent des électrovannes à pointeau de réapprovisionnement 276.

Selon ce mode particulier de réalisation, outre être placées sur ladite rampe, lesdites électrovannes à pointeau de réapprovisionnement 276 peuvent aussi être placées en un point quelconque du circuit qu'elles ont à charge d'ouvrir ou de fermer et donc, en un point quelconque de la centrale hydraulique 200.

On note également que ce principe peut également être retenu pour la pompe haute pression, non représenté, qui alimente la centrale hydraulique 200, ladite pompe pouvant être entraînée par l'un quelconque des arbres à cames du moteur à taux de compression variable.

En ce cas, l'électrovanne permettant la mise en circuit de ladite pompe peut également être constituée d'un pointeau maintenu sur son siège ou éloigné dudit siège par une ventouse électromagnétique ou un électroaimant à solenoïde.

On remarque également que, selon un mode particulier de réalisation de la centrale hydraulique 200 pour moteur à taux de compression variable telle que décrite dans la demande de brevet français FR 07/05237, la vanne électro-hydraulique à levée de bille 250 selon l'invention peut s'appliquer sans modification aucune au dispositif de sélection de la pression d'entrée 248 des vérins de commande 8, ledit dispositif de sélection 248 comportant un tiroir de sélection qui peut avantageusement être remplacé par ladite vanne électro-hydraulique 250 (figure 11).

### FONCTIONNEMENT :

Selon un mode particulier de réalisation et en relation avec les figures, le fonctionnement de la vanne électro-hydraulique à levée de bille 250 pour centrale hydraulique 200 d'un moteur à taux de compression variable est le suivant :

En fonction du régime et de la charge du moteur à taux de compression variable, la pression appliquée aux vérins presseurs 170 doit varier. Ceci est rendu nécessaire du fait des variations de l'effort appliqué aux pièces de l'attelage mobile dudit moteur, qui nécessitent un effort plus ou moins important exercé par les vérins presseurs 170 pour limiter les émissions acoustiques dudit moteur.

Pour obtenir une variation de la pression régnant dans la chambre du ou des vérin(s) presseur(s) 170 du moteur, les différents étages de l'amplificateur multiétagé 241 - dits cylindres émetteurs - peuvent être soumis de façon indépendante soit à la pression élevée du circuit haute pression (HP) de la centrale hydraulique 200, soit à la pression faible du circuit basse pression (LP) de ladite centrale.

Les différents étages dudit amplificateur multi-étagé 241 coopèrent à fournir la pression recherchée pour les vérins presseurs 170 en additionnant leurs efforts de poussée, la somme de ces efforts étant appliquée via le piston multi-étagé 239 à un cylindre récepteur, non représenté, relié de façon hydraulique aux vérins presseurs 170 du moteur.

Lorsque, tenant compte des conditions de fonctionnement du moteur à taux de compression variable, le calculateur de gestion ECU dudit moteur, non représenté, doit faire varier la pression appliquée aux vérins presseurs 170 dudit moteur, ledit calculateur doit selon le cas faire varier la pression appliquée à un ou plusieurs étages de l'amplificateur multi-étagé 241 en les mettant en relation soit avec le circuit haute pression (HP) de la centrale hydraulique 200, soit avec le circuit basse pression (LP) de ladite centrale.

Si l'on considère un seul et même étage de l'amplificateur multi-étagé 241, on voit sur les figures 4 à 7 que la vanne électro-hydraulique à levée de bille 250 comporte deux états.

On remarque un premier état où le circuit basse pression (LP) de la centrale hydraulique 200 est en communication avec ledit étage, le piston de levage 261 étant poussé par son ressort de levage 264 pour lever la bille 252 placée sur le circuit basse pression (LP) de son siège 254, de manière à permettre à l'huile de circuler librement entre ledit étage et ledit circuit basse pression (LP), la bille 251 placée sur le circuit haute pression (HP) restant posée sur son siège 253 (figure 4).

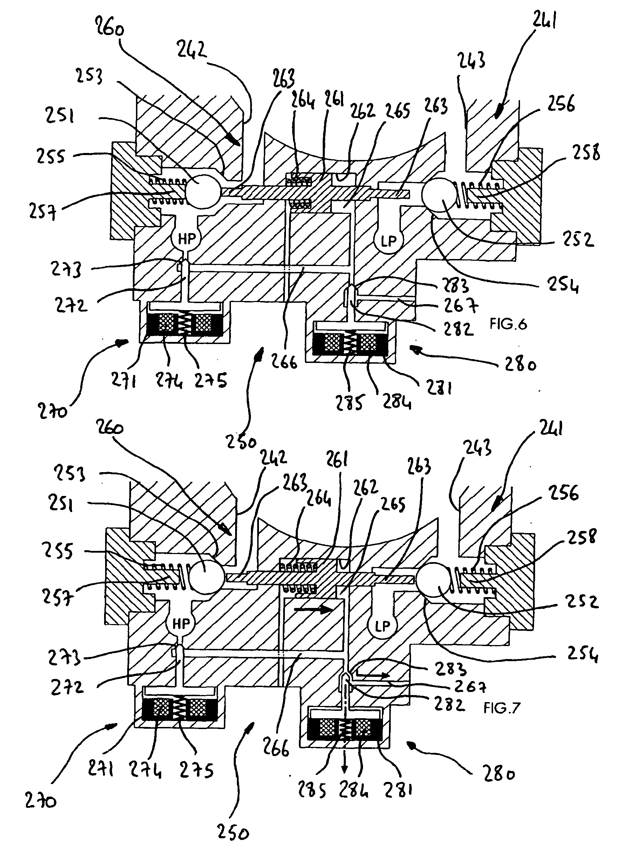

Et un deuxième état où le circuit haute pression (HP) de la centrale hydraulique 200 est en communication avec ledit étage, le piston de levage 261 étant poussé par la pression régnant dans le circuit haute pression (HP) de la centrale hydraulique 200 pour lever la bille 251 placée sur le circuit haute pression (HP) de son siège 253, de manière à permettre à l'huile de circuler librement entre ledit étage et ledit circuit haute pression (HP), la bille 252 placée sur le circuit basse pression (LP) restant posée sur son siège 254, et le ressort de levage 264 étant comprimé (figure 6).

Lorsque le calculateur de gestion ECU dudit moteur doit mettre en relation avec le circuit haute pression (HP) de la centrale hydraulique 200 l'un des étages de l'amplificateur multi-étagé 241, ledit étage étant jusqu'alors en relation avec le circuit basse pression (LP), il applique une tension électrique aux bornes de la ventouse électromagnétique 271 de l'électrovanne de levage haute pression 270 correspondant audit étage pour la mettre en position ouverte, l'électrovanne de levage basse pression 280 dudit étage restant quant à elle en position fermée.

Ladite ventouse électromagnétique 271 de l'électrovanne de levage haute pression 270 va ainsi lever le pointeau 272 de ladite électrovanne jusqu'alors maintenu en pression sur son siège 273 par un ressort 275, permettant à l'huile contenue dans le circuit haute pression (HP) de la centrale hydraulique 200 de pénétrer par l'intermédiaire du conduit de levage 266 dans la chambre de levage 265.

Ainsi mise sous pression, ladite chambre de levage 265 va communiquer sa pression au piston de levage 261 qui va en se déplaçant, d'abord reposer la bille 252 placée sur le circuit basse pression (LP) sur son siège 254 tout en comprimant le ressort de levage 264, puis lever la bille 251 placée sur le circuit haute pression (HP) de son siège 253 tout en finissant de comprimer ledit ressort (figure 5).

Une fois la manoeuvre terminée, ledit calculateur cesse de maintenir ouverte l'électrovanne de levage haute pression 270 et la pression dans la chambre de levage 265 persiste de sorte que l'étage considéré reste en relation avec le circuit haute pression (HP) de la centrale hydraulique 200 aussi longtemps que nécessaire.

On remarque sur les figures 5 et 7 que les deux billes ne peuvent pas être ouvertes simultanément par le piston de levage 261.

Lorsque le calculateur de gestion ECU dudit moteur doit mettre en relation avec le circuit basse pression (LP) de la centrale hydraulique 200 l'étage considéré de l'amplificateur multi-étagé 241, ledit étage étant alors en relation avec le circuit haute pression (HP), il applique une tension électrique aux bornes de la ventouse électromagnétique 281 de l'électrovanne de levage basse pression 280 correspondant audit étage pour la mettre en position ouverte, l'électrovanne de levage haute pression 270 dudit étage restant quant à elle en position fermée.

Ladite ventouse électromagnétique 281 de l'électrovanne de levage basse pression 280 lève ainsi le pointeau 282 de ladite électrovanne jusqu'alors maintenu en pression sur son siège 283 par un ressort 285, permettant à l'huile contenue dans la chambre de levage 265 de s'échapper de ladite chambre pour retourner au carter d'huile de lubrification 500 du moteur à taux de compression variable (figure 7).

Ladite chambre de levage 265 ainsi mise à l'air libre, l'huile qu'elle contient cesse d'exercer une pression sur le piston de levage 261 qui se déplace alors sous la poussée du ressort de levage 264 en direction de la bille 252 placée sur le circuit basse pression (LP).

Le déplacement du piston de levage 261 a pour effet de déposer la bille 251 placée sur le circuit haute pression (HP) sur son siège 253 tout en détendant le ressort de levage 264, puis de lever la bille 252 placée sur le circuit basse pression (LP) de son siège 254 tout en finissant de détendre ledit ressort de levage 264.

Une fois la manoeuvre terminée, ledit calculateur cesse de maintenir ouverte l'électrovanne de levage basse pression 280 et la pression dans la chambre de levage 265 reste nulle de sorte que l'étage considéré reste en relation avec le circuit basse pression (LP) de la centrale hydraulique 200 aussi longtemps que nécessaire.

On note que lors des manoeuvres de changement de position du piston de levage 261, les deux billes 251, 252 se retrouvent un court instant simultanément fermées lorsque ledit piston 261 se trouve approximativement au milieu de sa course et qu'aucun des deux poussoirs cylindriques 263 via lesquels il peut lever les billes 251, 252 n'est en contact avec lesdites billes (figures 5 et 7).

Comme le piston multi-étagé 239 de l'amplificateur multi-étagé 241 continue de se déplacer longitudinalement et cycliquement du fait du fonctionnement du moteur à taux de compression variable, le volume du cylindre émetteur de l'étage varie.

Dans le cas de l'augmentation de volume dudit cylindre, la bille 252 placée sur le circuit basse pression (LP) se lève de son siège 254 car la pression du circuit basse pression (LP) de la centrale hydraulique 200 devient supérieure à celle régnant dans ledit cylindre ce qui a pour effet de laisser passer l'huile nécessaire au maintien de la pression dans le cylindre au-dessus de la pression de cavitation.

Dans le cas de la réduction de volume dudit cylindre, la bille 251 placée sur le circuit haut pression (HP) se lève de son siège 253 car la pression du circuit haute pression (HP) de la centrale hydraulique 200 devient inférieure à celle régnant dans ledit cylindre ce qui a pour effet de laisser passer l'huile nécessaire au maintien de la pression dans ledit cylindre en dessous d'un seuil qui deviendrait destructeur pour le moteur à taux de compression variable du fait de l'augmentation momentanée de la pression appliquée à ses vérins presseurs 170 qui en résulterait.

Du fait de leur fonctionnement s'assimilant à celui d'un clapet anti-retour, les billes 251, 252 ; 401, 402 de la vanne électro-hydraulique à levée de bille 250 selon l'invention qui sont respectivement placées sur le circuit haute (HP) et basse pression (LP) de la centrale hydraulique 200 protègent le cylindre émetteur de l'étage avec lequel elles communiquent, de tout risque de cavitation ou de surpression.

Comme on le constate à la lecture de la description du fonctionnement de la vanne électro-hydraulique à levée de bille 250, le maintien d'une haute pression ou d'une basse pression dans le cylindre de l'un quelconque des étages de l'amplificateur multi-étagé 241 de la centrale hydraulique 200 ne consomme pas d'énergie électrique dans la mesure ou le pointeau 272, 282 des électrovannes de levage 270, 280 correspondantes est maintenu en pression sur son siège 273, 283 par un ressort 275, 285.

Cependant, pour compenser toute fuite pouvant survenir au niveau du joint d'étanchéité du piston de levage 261 ou du joint du poussoir cylindrique 263 basse pression, ou au niveau du siège 273, 283 de l'un quelconque des pointeaux 272, 282 des électrovannes haute pression 270 ou basse pression 280, le calculateur du moteur à taux de compression variable peut actionner régulièrement à un intervalle de temps prévu en fonction des risques de fuites constatés expérimentalement, l'électrovanne devant être actionnée pour obtenir la pression voulue pour l'étage considéré.

Cette stratégie permet de replacer régulièrement le piston de levage 261 dans la position voulue, même s'il tendait à dériver du fait de fuites.

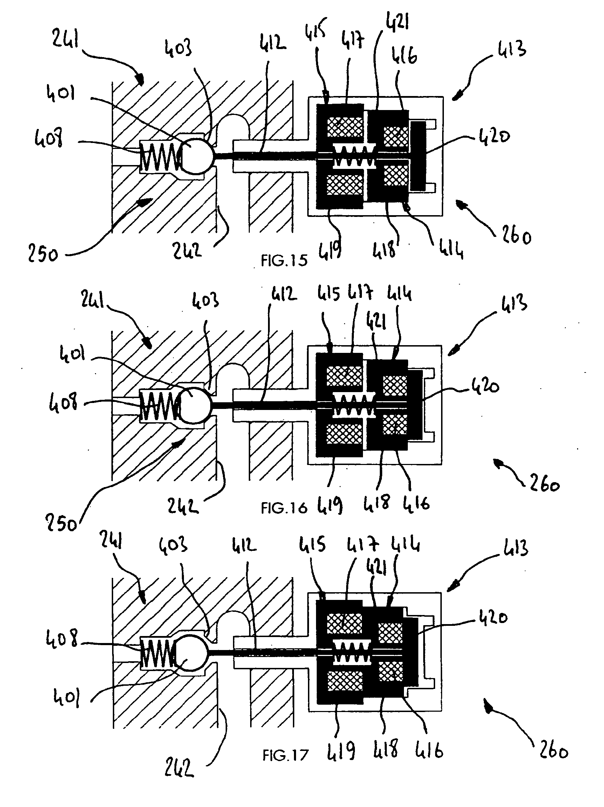

Comme montré en figures 15 à 17 puis en figures 18 à 20 illustrant respectivement le fonctionnement du dispositif de vanne électro-hydraulique à levée de bille 250 selon la première et seconde variante de la présente invention, l'action du piston de levage 261 peut être remplacé par celle de ventouses électromagnétiques 414, 415 ; 432, 433 pour lever les billes 401, 402 de leur siège 403, 404.

On remarque selon ces variantes qu'une première ventouse électromagnétique 414, 432 est utilisée pour décoller lesdites billes 401, 402 de leur siège 403, 404 malgré une pression élevée appliquée sur lesdites billes, tandis qu'une deuxième ventouse électromagnétique 415, 433 est utilisée pour éloigner lesdites billes 401, 402 de leur siège 403, 404 afin d'offrir une section de passage suffisante à l'huile circulant entre la centrale hydraulique 200 et le cylindre émetteur de l'amplificateur multi-étagé 241.

Il doit d'ailleurs être entendu que la description qui précède n'a été donnée qu'à titre d'exemple et qu'elle ne limite nullement le domaine de l'invention dont on ne sortirait pas en remplaçant les détails d'exécution décrits par tout autre équivalent.

## Revendications

1. Vanne électro-hydraulique à levée de bille pour centrale hydraulique (200) de moteur à taux de compression variable, **caractérisée en ce qu'**elle comprend :
• Au moins deux billes ou clapets (251, 252 ; 401, 402) reposant chacun(e) sur un siège (253, 254 ; 403, 404) pour obturer chacun(e) un conduit (242, 243), le premier conduit (242) reliant un circuit haute pression (HP) de la centrale hydraulique (200) à l'un des étages d'un amplificateur de pression multi-étagé (241) que comporte ladite centrale, tandis que le deuxième conduit (243) relie un circuit basse pression (LP) de ladite centrale audit étage, lesdites billes (251, 252 ; 401, 402) fonctionnant comme un clapet anti-retour lorsqu'elle sont maintenues sur leur siège (253, 254 ; 403, 404) par un ressort (255, 256 ; 408, 409) pour laisser l'huile contenue dans ledit étage aller vers le circuit haute pression (HP) de ladite centrale mais non en revenir, et pour laisser l'huile en provenance du circuit basse pression (LP) de ladite centrale entrer dans ledit étage mais non en ressortir,
• Et des moyens de levage (260) permettant de soulever les billes ou clapets (251, 252 ; 401, 402) de leur siège (253, 254 ; 403, 404) pour laisser ladite huile à la fois entrer et sortir dudit étage de l'amplificateur de pression multi-étagé (241), lesdits moyens de levage (260) étant constitués d'actionneurs électromécaniques de levage (413) permettant chacun de lever une bille (401, 402), lesdits actionneurs pouvant tirer ou pousser un poussoir cylindrique (412) permettant de lever ladite bille (401, 402), lorsque son extrémité entre en contact puis soulève ladite bille, lesdits actionneurs électromécaniques de levage (413) comportant une première ventouse électromagnétique (414, 432) permettant de lever la bille (401, 402) sur une petite hauteur, et une deuxième ventouse électromagnétique (415, 433) permettant de lever ladite bille (401, 402) sur une hauteur plus élevée.

2. Vanne électro-hydraulique à levée de bille pour centrale hydraulique de moteur à taux de compression variable suivant la revendication 1, **caractérisée en ce que** les actionneurs électromécaniques de levage (413) sont constitués d'au moins une ventouse électromagnétique comportant un bobinage et une cage apte à être fixée directement ou indirectement sur l'amplificateur de pression multi-étagé (241) de la centrale hydraulique (200), ledit bobinage servant à créer un champ magnétique permettant d'attirer une palette métallique de poussoir poussant le poussoir cylindrique (412) quand ledit bobinage est traversé par un courant électrique.

3. Vanne électro-hydraulique à levée de bille pour centrale hydraulique de moteur à taux de compression variable suivant la revendication 1, **caractérisée en ce que** la première ventouse électromagnétique (414) de l'actionneur électromécanique (413) est constituée d'un bobinage (416) et d'une cage métallique (418) qui peut être fixée sur une palette métallique support (421), ladite palette métallique support (421) pouvant se déplacer en direction de la bille (401, 402) mais étant arrêtée dans la direction opposée par un dispositif de réglage de deuxième ventouse (422, 424) solidaire directement ou indirectement de l'amplificateur de pression multi-étagé (241) de la centrale hydraulique (200).

4. Vanne électro-hydraulique à levée de bille pour centrale hydraulique de moteur à taux de compression variable suivant la revendication 1, **caractérisée en ce que** la deuxième ventouse électromagnétique (415) de l'actionneur électromécanique (413) est constituée d'un bobinage (417) et d'une cage métallique (419) apte à être fixée directement ou indirectement sur l'amplificateur de pression multi-étagé (241) de la centrale hydraulique (200), ledit bobinage (417) servant à créer un champ magnétique de manière à attirer la palette métallique support (421) de la première ventouse électromagnétique (414) lorsque ledit bobinage (417) de ladite deuxième ventouse électromagnétique (415) est traversé par un courant électrique.

5. Vanne électro-hydraulique à levée de bille pour centrale hydraulique de moteur à taux de compression variable suivant la revendication 3, **caractérisée en ce que** la distance maximale entre une palette métallique de poussoir (420) solidaire ou en contact avec le poussoir cylindrique (412) d'une part, et la cage métallique (418) de la première ventouse électromagnétique (414) d'autre part, peut être réglée au moyen d'un dispositif de réglage de première ventouse (423, 430) de manière à régler la petite hauteur de levée de la bille (401, 402).

6. Vanne électro-hydraulique à levée de bille pour centrale hydraulique de moteur à taux de compression variable suivant la revendication 5, **caractérisée en ce que** le dispositif de réglage de première ventouse électromagnétique consiste en un filetage (430) permettant de régler la position d'une butée de poussoir (423) apte à être solidaire directement ou indirectement de l'amplificateur de pression multi-étagé (241) de la centrale hydraulique (200) et sur laquelle prend appui la palette métallique de poussoir (420) par rapport à la position de la cage métallique (418), ledit filetage (430) pouvant être arrêté en rotation par des moyens de blocage (431).

7. Vanne électro-hydraulique à levée de bille pour centrale hydraulique de moteur à taux de compression variable suivant la revendication 3, **caractérisée en ce que** la distance maximale entre la palette métallique support (421) de la première ventouse électromagnétique (414) et la cage métallique (419) de la deuxième ventouse électromagnétique (415) peut être réglée au moyen d'un dispositif de réglage de deuxième ventouse (422, 424), de manière à régler la grande hauteur de levée de la bille (401, 402).

8. Vanne électro-hydraulique à levée de bille pour centrale hydraulique de moteur à taux de compression variable suivant la revendication 7, **caractérisée en ce que** le dispositif de réglage de la deuxième ventouse consiste en un filetage (424) permettant de régler la position de la butée (422) de la palette métallique support (421) par rapport à la position de la cage métallique (419) de la deuxième ventouse électromagnétique (415), ledit filetage (424) pouvant être arrêté en rotation par des moyens de blocage (425).

9. Vanne électro-hydraulique à levée de bille pour centrale hydraulique de moteur à taux de compression variable suivant la revendication 1, **caractérisée en ce qu'**il comprend un dispositif de réglage de la garde à la bille consistant en un filetage apte à être aménagé directement ou indirectement dans l'amplificateur de pression multi-étagé (241) de la centrale hydraulique (200) et permettant de régler la position de la butée de poussoir (423) par rapport à celle du siège (403, 404) de la bille (401, 402).

10. Le Vanne électro-hydraulique à levée de bille pour centrale hydraulique de moteur à taux de compression variable suivant la revendication 9, **caractérisée en ce que** le dispositif de réglage de la garde à la bille consiste en un filetage apte à être aménagé directement ou indirectement dans l'amplificateur de pression multi-étagé (241) de la centrale hydraulique (200), permettant de régler la position de la butée de poussoir (423) par rapport à celle du siège (403, 404) de la bille (401, 402), ledit filetage pouvant être arrêté en rotation par des moyens de blocage.

11. Vanne électro-hydraulique à levée de bille pour centrale hydraulique de moteur à taux de compression variable suivant la revendication 1, **caractérisée en ce que** les actionneurs électromécaniques de levage (413) sont constitués d'une première ventouse électromagnétique (432) et d'une deuxième ventouse électromagnétique (433) apte à être fixées solidairement au carter de l'amplificateur de pression multi-étagé (241), ladite première ventouse (432) pouvant attirer une palette libre de petite levée (438) venant en contact avec le poussoir cylindrique (412), tandis que la deuxième ventouse électromagnétique (433) permet d'attirer une palette de grande levée (434) solidaire dudit poussoir.

12. Vanne électro-hydraulique à levée de bille pour centrale hydraulique de moteur à taux de compression variable suivant la revendication 11, **caractérisée en ce que** les ventouses électromagnétiques de petite levée (432) et de grande levée (433) sont apte à être rendues solidaires du carter de l'amplificateur de pression multi-étagé (241), par un fourreau cylindrique (435) dans lequel elles sont logées, ledit fourreau (435) étant apte à être fixé sur ledit carter de l'amplificateur de pression multi-étagé (241).

13. Vanne électro-hydraulique à levée de bille pour centrale hydraulique de moteur à taux de compression variable suivant la revendication 11, **caractérisée en ce que** la palette libre de petite levée (438) comporte un ressort de rappel (436).

14. Vanne électro-hydraulique à levée de bille pour centrale hydraulique de moteur à taux de compression variable suivant la revendication 11, **caractérisée en ce que** la palette de grande levée (434) solidaire du poussoir cylindrique (412) comporte un ressort de rappel (437).

15. Vanne électro-hydraulique à levée de bille pour centrale hydraulique de moteur à taux de compression variable suivant la revendication 11, **caractérisée en ce que** la ventouse électromagnétique de petite levée (432) comporte des moyens de réglage permettant de régler la hauteur de la petite levée du poussoir cylindrique (412).

16. Vanne électro-hydraulique à levée de billes pour centrale hydraulique de moteur à taux de compression variable suivant la revendication 11, **caractérisée en ce que** la ventouse électromagnétique de grande levée (433) comporte des moyens de réglage permettant de régler la hauteur de la grande levée du poussoir cylindrique (412).

17. Vanne électro-hydraulique à levée de bille pour centrale hydraulique de moteur à taux de compression variable suivant la revendication 12, **caractérisée en ce que** le fourreau cylindrique (435) comporte des moyens de réglage permettant de régler la distance entre le poussoir cylindrique (412) et la bille (401, 402) lorsque aucune des ventouses électromagnétiques (432, 433) n'est alimentée en courant électrique.

## Claims

1. Ball-lift electrohydraulic valve for a hydraulic power unit (200) of a variable compression ratio engine, **characterized in that** it comprises:
• at least two balls or valve elements (251, 252; 401, 402) each resting on a seat (253, 254; 403, 404) in order for each to close off a duct (242, 243), the first duct (242) connecting a highpressure circuit (HP) of the hydraulic power unit (200) to one of the stages of a multi-stage pressure amplifier (241) that said power unit comprises, while the second duct (243) connects a low-pressure circuit (LP) of said power unit to said stage, said balls (251, 252; 401, 402) operating like a nonreturn valve element when they are held on their seat (253, 254; 403, 404) by a spring (255, 256; 408, 409) in order to allow the oil contained in said stage to go to the highpressure circuit (HP) of said power unit but not to return therefrom, and in order to allow the oil originating from the low-pressure circuit (LP) of said power unit to enter said stage but not to leave it again,
• and lifting means (260) making it possible to lift the balls or valve elements (251, 252; 401, 402) from their seat (253, 254; 403, 404) in order to allow said oil both to enter and leave said stage of the multi-stage pressure amplifier (241), said lifting means (260) consisting of electromechanical lift actuators (413) each making it possible to lift a ball (401, 402), said actuators being able to pull or push a cylindrical lifter (412) making it possible to lift said ball (401, 402) when its end comes into contact and then lifts said ball, said electromechanical lift actuators (413) comprising a first electromagnetic suction cup (414, 432) making it possible to lift the ball (401, 402) over a small height, and a second electromagnetic suction cup (415, 433) making it possible to lift said ball (401, 402) over a greater height.

2. Ball-lift electrohydraulic valve for a hydraulic power unit of a variable compression ratio engine according to Claim 1, **characterized in that** the electromechanical lift actuators (413) consist of at least one electromagnetic suction cup comprising a winding and a cage able to be directly or indirectly attached to the multi-stage pressure amplifier (241) of the hydraulic power unit (200), said winding being used to create a magnetic field making it possible to attract a metal lifter armature pushing the cylindrical lifter (412) when said winding is traversed by an electric current.

3. Ball-lift electrohydraulic valve for a hydraulic power unit of a variable compression ratio engine according to Claim 1, **characterized in that** the first electromagnetic suction cup (414) of the electromechanical actuator (413) consists of a winding (416) and of a metal cage (418) that can be attached to a metal supporting armature (421), said metal supporting armature (421) being able to move toward the ball (401, 402) but being stopped in the opposite direction by a second suction cup adjustment device (422, 424) directly or indirectly secured to the multi-stage pressure amplifier (241) of the hydraulic power unit (200).

4. Ball-lift electrohydraulic valve for a hydraulic power unit of a variable compression ratio engine according to Claim 1, **characterized in that** the second electromagnetic suction cup (415) of the electromechanical actuator (413) consists of a winding (417) and of a metal cage (419) able to be directly or indirectly attached to the multi-stage pressure amplifier (241) of the hydraulic power unit (200), said winding (417) being used to create a magnetic field so as to attract the metal supporting armature (421) of the first electromagnetic suction cup (414) when said winding (417) of said second electromagnetic suction cup (415) is traversed by an electric current.

5. Ball-lift electrohydraulic valve for a hydraulic power unit of a variable compression ratio engine according to Claim 3, **characterized in that** the maximum distance between a metal lifter armature (420) secured to or in contact with the cylindrical lifter (412) on the one hand, and the metal cage (418) of the first electromagnetic suction cup (414) on the other hand, can be adjusted by means of a first suction cup adjustment device (423, 430) so as to adjust the small lift height of the ball (401, 402).

6. Ball-lift electrohydraulic valve for a hydraulic power unit of a variable compression ratio engine according to Claim 5, **characterized in that** the first electromagnetic suction cup adjustment device consists of a thread (430) making it possible to adjust the position of a lifter stop (423) able to be directly or indirectly secured to the multi-stage pressure amplifier (241) of the hydraulic power unit (200) and on which the metal lifter armature (420) presses relative to the position of the metal cage (418), said thread (430) being able to be stopped from rotating by locking means (431).

7. Ball-lift electrohydraulic valve for a hydraulic power unit of a variable compression ratio engine according to Claim 3, **characterized in that** the maximum distance between the metal supporting armature (421) of the first electromagnetic suction cup (414) and the metal cage (419) of the second electromagnetic suction cup (415) can be adjusted by means of a second suction cup adjustment device (422, 424), so as to adjust the large lift height of the ball (401, 402).

8. Ball-lift electrohydraulic valve for a hydraulic power unit of a variable compression ratio engine according to Claim 7, **characterized in that** the second suction cup adjustment device consists of a thread (424) making it possible to adjust the position of the stop (422) of the metal supporting armature (421) relative to the position of the metal cage (419) of the second electromagnetic suction cup (415), said thread (424) being able to be stopped from rotating by locking means (425).

9. Ball-lift electrohydraulic valve for a hydraulic power unit of a variable compression ratio engine according to Claim 1, **characterized in that** it comprises a ball-clearance adjustment device consisting of a thread able to be created directly or indirectly in the multi-stage pressure amplifier (241) of the hydraulic power unit (200) and making it possible to adjust the position of the lifter stop (423) relative to that of the seat (403, 404) of the ball (401, 402).

10. Ball-lift electrohydraulic valve for a hydraulic power unit of a variable compression ratio engine according to Claim 9, **characterized in that** the ball-clearance adjustment device consists of a thread able to be created directly or indirectly in the multi-stage pressure amplifier (241) of the hydraulic power unit (200), making it possible to adjust the position of the lifter stop (423) relative to that of the seat (403, 404) of the ball (401, 402), said thread being able to be stopped from rotating by locking means.

11. Ball-lift electrohydraulic valve for a hydraulic power unit of a variable compression ratio engine according to Claim 1, **characterized in that** the electromechanical lift actuators (413) consist of a first electromagnetic suction cup (432) and of a second electromagnetic suction cup (433) able to be securely attached to the casing of the multi-stage pressure amplifier (241), said first suction cup (432) being able to attract a small-lift free armature (438) coming into contact with the cylindrical lifter (412), while the second electromagnetic suction cup (433) makes it possible to attract a large-lift armature (434) secured to said lifter.

12. Ball-lift electrohydraulic valve for a hydraulic power unit of a variable compression ratio engine according to Claim 11, **characterized in that** the small-lift electromagnetic suction cup (432) and large-lift electromagnetic suction cup (433) are able to be secured to the casing of the multi-stage pressure amplifier (241) by a cylindrical sheath (435) in which they are housed, said sheath (435) being able to be attached to said casing of the multi-stage pressure amplifier (241).

13. Ball-lift electrohydraulic valve for a hydraulic power unit of a variable compression ratio engine according to Claim 11, **characterized in that** the small-lift free armature (438) comprises a return spring (436).

14. Ball-lift electrohydraulic valve for a hydraulic power unit of a variable compression ratio engine according to Claim 11, **characterized in that** the large-lift armature (434) secured to the cylindrical lifter (412) comprises a return spring (437).

15. Ball-lift electrohydraulic valve for a hydraulic power unit of a variable compression ratio engine according to Claim 11, **characterized in that** the small-lift electromagnetic suction cup (432) comprises adjustment means making it possible to adjust the height of the small lift of the cylindrical lifter (412).

16. Ball-lift electrohydraulic valve for a hydraulic power unit of a variable compression ratio engine according to Claim 11, **characterized in that** the large-lift electromagnetic suction cup (433) comprises adjustment means making it possible to adjust the height of the large lift of the cylindrical lifter (412).

17. Ball-lift electrohydraulic valve for a hydraulic power unit of a variable compression ratio engine according to Claim 12, **characterized in that** the cylindrical sheath (435) comprises adjustment means making it possible to adjust the distance between the cylindrical lifter (412) and the ball (401, 402) when none of the electromagnetic suction cups (432, 433) is supplied with electric current.

## Patentansprüche

1. Elektrohydraulisches Ventil mit Kugelhub für eine Hydraulikeinheit (200) eines Motors mit variablem Verdichtungsverhältnis, **dadurch gekennzeichnet, dass** es enthält:
• mindestens zwei Kugeln oder Klappen (251, 252; 401, 402), die je auf einem Sitz (253, 254; 403, 404) ruhen, um je einen Kanal (242, 243) zu verschließen, wobei der erste Kanal (242) einen Hochdruckkreis (HP) der Hydraulikeinheit (200) mit einer der Stufen eines mehrstufigen Druckverstärkers (241) verbindet, den die Einheit aufweist, während der zweite Kanal (243) einen Niederdruckkreis (LP) der Einheit mit der Stufe verbindet, wobei die Kugeln (251, 252; 401, 402) wie ein Rückschlagventil arbeiten, wenn sie von einer Feder (255, 256; 408, 409) auf ihrem Sitz (253, 254; 403, 404) gehalten werden, um das in der Stufe enthaltene Öl zum Hochdruckkreis (HP) der Einheit gehen, aber nicht von dort zurückkommen zu lassen, und um das vom Niederdruckkreis (LP) der Einheit kommende Öl in die Stufe eintreten, aber nicht wieder daraus austreten zu lassen,
• und Hubeinrichtungen (260), die es ermöglichen, die Kugeln oder Klappen (251, 252; 401, 402) von ihrem Sitz (253, 254; 403, 404) abzuheben, um das Öl sowohl in die Stufe des mehrstufigen Druckverstärkers (241) ein- als auch aus ihr austreten zu lassen, wobei die Hubeinrichtungen (260) aus elektromechanischen Hubantrieben (413) bestehen, die es je ermöglichen, eine Kugel (401, 402) anzuheben, wobei die Antriebe einen zylindrischen Stößel (412) ziehen oder schieben können, was es ermöglicht, die Kugel (401, 402) anzuheben, wenn sein Ende mit der Kugel in Kontakt kommt und sie dann anhebt, wobei die elektromechanischen Hubantriebe (413) einen ersten elektromagnetischen Sauger (414, 432), der es ermöglicht, die Kugel (401, 402) über eine kleine Höhe anzuheben, und einen zweiten elektromagnetischen Sauger (415, 433) aufweisen, der es ermöglicht, die Kugel (401, 402) über eine größere Höhe anzuheben.

2. Elektrohydraulisches Ventil mit Kugelhub für die Hydraulikeinheit eines Motors mit variablem Verdichtungsverhältnis nach Anspruch 1, **dadurch gekennzeichnet, dass** die elektromechanischen Hubantriebe (413) aus mindestens einem elektromagnetischen Sauger bestehen, der eine Wicklung und einen Käfig aufweist, der direkt oder indirekt an dem mehrstufigen Druckverstärker (241) de Hydraulikeinheit (200) befestigt ist, wobei die Wicklung dazu dient, ein Magnetfeld zu erzeugen, das es ermöglicht, eine metallische Stößelplatte anzuziehen, die den zylindrischen Stößel (412) schiebt, wenn die Wicklung von einem elektrischen Strom durchflossen wird.

3. Elektrohydraulisches Ventil mit Kugelhub für die Hydraulikeinheit eines Motors mit variablem Verdichtungsverhältnis nach Anspruch 1, **dadurch gekennzeichnet, dass** der erste elektromagnetische Sauger (414) des elektromechanischen Hubantriebs (413) aus einer Wicklung (416) und aus einem metallischen Käfig (418) besteht, der an einer metallischen Trägerplatte (421) befestigt werden kann, wobei die metallische Trägerplatte (421) sich in Richtung der Kugel (401, 402) verschieben kann, aber in der Gegenrichtung von einer Einstellvorrichtung eines zweiten Saugers (422, 424) angehalten wird, die direkt oder indirekt fest mit dem mehrstufigen Druckverstärker (241) der Hydraulikeinheit (200) verbunden ist.

4. Elektrohydraulisches Ventil mit Kugelhub für die Hydraulikeinheit eines Motors mit variablem Verdichtungsverhältnis nach Anspruch 1, **dadurch gekennzeichnet, dass** der zweite elektromagnetische Sauger (415) des elektromechanischen Hubantriebs (413) aus einer Wicklung (417) und einem metallischen Käfig (419) besteht, der direkt oder indirekt am mehrstufigen Druckverstärker (241) der Hydraulikeinheit (200) befestigt werden kann, wobei die Wicklung (417) dazu dient, ein Magnetfeld zu erzeugen, um die metallische Trägerplatte (421) des ersten elektromagnetischen Saugers (414) anzuziehen, wenn die Wicklung (417) des zweiten elektromagnetischen Saugers (415) von einem elektrischen Strom durchflossen wird.

5. Elektrohydraulisches Ventil mit Kugelhub für die Hydraulikeinheit eines Motors mit variablem Verdichtungsverhältnis nach Anspruch 3, **dadurch gekennzeichnet, dass** der maximale Abstand zwischen einer metallischen Stößelplatte (420), die fest mit dem zylindrischen Stößel (412) verbunden oder mit ihm in Kontakt ist, einerseits, und dem metallischen Käfig (418) des ersten elektromagnetischen Saugers (414) andererseits, mittels einer Einstellvorrichtung des ersten Saugers (423, 430) eingestellt werden kann, um die kleine Hubhöhe der Kugel (401, 402) einzustellen.

6. Elektrohydraulisches Ventil mit Kugelhub für die Hydraulikeinheit eines Motors mit variablem Verdichtungsverhältnis nach Anspruch 5, **dadurch gekennzeichnet, dass** die Einstellvorrichtung des ersten elektromagnetischen Saugers aus einem Gewinde (430) besteht, das es ermöglicht, die Stellung eines Stößelanschlags (423}, der direkt oder indirekt mit dem mehrstufigen Druckverstärker (241) der Hydraulikeinheit (200) fest verbunden sein kann und auf dem die metallische Stößelplatte (420) aufliegt, bezüglich der Stellung des metallischen Käfigs (418) einzustellen, wobei die Drehung des Gewindes (430) von Blockiereinrichtungen (431) angehalten werden kann.

7. Elektrohydraulisches Ventil mit Kugelhub für die Hydraulikeinheit eines Motors mit variablem Verdichtungsverhältnis nach Anspruch 3, **dadurch gekennzeichnet, dass** der maximale Abstand zwischen der metallischen Trägerplatte (421) des ersten elektromagnetischen Saugers (414) und dem metallischen Käfig (419) des zweiten elektromagnetischen Saugers (415) mit Hilfe einer Einstellvorrichtung des zweiten Saugers (422, 424) eingestellt werden kann, um die große Hubhöhe der Kugel (401, 402) einzustellen.

8. Elektrohydraulisches Ventil mit Kugelhub für die Hydraulikeinheit eines Motors mit variablem Verdichtungsverhältnis nach Anspruch 7, **dadurch gekennzeichnet, dass** die Einstellvorrichtung des zweiten Saugers aus einem Gewinde (424) besteht, das es ermöglicht, die Stellung des Anschlags (422) der metallischen Trägerplatte (421) bezüglich der Stellung des metallischen Käfigs (419) des zweiten elektromagnetischen Saugers (415) einzustellen, wobei die Drehung des Gewindes (424) von Blockiereinrichtungen (425) angehalten werden kann.

9. Elektrohydraulisches Ventil mit Kugelhub für die Hydraulikeinheit eines Motors mit variablem Verdichtungsverhältnis nach Anspruch 1, **dadurch gekennzeichnet, dass** es eine Einstellvorrichtung des Abstands zur Kugel enthält, die aus einem Gewinde besteht, das direkt oder indirekt im mehrstufigen Druckverstärker (241) der Hydraulikeinheit (200) angeordnet sein kann und es ermöglicht, die Stellung des Stößelanschlags (423) bezüglich derjenigen des Sitzes (403, 404) der Kugel (401, 402) einzustellen.

10. Elektrohydraulisches Ventil mit Kugelhub für die Hydraulikeinheit eines Motors mit variablem Verdichtungsverhältnis nach Anspruch 9, **dadurch gekennzeichnet, dass** die Einstellvorrichtung des Abstands zur Kugel aus einem Gewinde besteht, das direkt oder indirekt im mehrstufigen Druckverstärker (241) der Hydraulikeinheit (200) angeordnet sein kann und es ermöglicht, die Stellung des Stößelanschlags (423) bezüglich derjenigen des Sitzes (403, 404) der Kugel (401, 402) einzustellen, wobei die Drehung des Gewindes durch Blockiereinrichtungen angehalten werden kann.

11. Elektrohydraulisches Ventil mit Kugelhub für die Hydraulikeinheit eines Motors mit variablem Verdichtungsverhältnis nach Anspruch 1, **dadurch gekennzeichnet, dass** die elektromechanischen Hubantriebe (413) aus einem ersten elektromagnetischen Sauger (432) und einem zweiten elektromagnetischen Sauger (433) bestehen, die fest am Gehäuse des mehrstufigen Druckverstärkers (241) befestigt werden können, wobei der erste Sauger (432) eine freie Platte kleinen Hubs (438) anziehen kann, die mit dem zylindrischen Stößel (412) in Kontakt kommt, während der zweite elektromagnetische Sauger (433) es ermöglicht, eine Platte großen Hubs (434) anzuziehen, die fest mit dem Stößel verbunden ist.

12. Elektrohydraulisches Ventil mit Kugelhub für die Hydraulikeinheit eines Motors mit variablem Verdichtungsverhältnis nach Anspruch 11, **dadurch gekennzeichnet, dass** die elektromagnetischen Sauger kleinen Hubs (432) und großen Hubs (433) durch eine zylindrische Hülse (435), in der sie untergebracht sind, fest mit dem Gehäuse des mehrstufigen Druckverstärkers (241) verbunden werden können, wobei die Hülse (435) am Gehäuse des mehrstufigen Druckverstärkers (241) befestigt werden kann.

13. Elektrohydraulisches Ventil mit Kugelhub für die Hydraulikeinheit eines Motors mit variablem Verdichtungsverhältnis nach Anspruch 11, **dadurch gekennzeichnet, dass** die freie Platte kleinen Hubs (438) eine Rückstellfeder (436) aufweist.

14. Elektrohydraulisches Ventil mit Kugelhub für die Hydraulikeinheit eines Motors mit variablem Verdichtungsverhältnis nach Anspruch 11, **dadurch gekennzeichnet, dass** die fest mit dem zylindrischen Stößel (412) verbundene Platte großen Hubs (434) eine Rückstellfeder (437) aufweist.

15. Elektrohydraulisches Ventil mit Kugelhub für die Hydraulikeinheit eines Motors mit variablem Verdichtungsverhältnis nach Anspruch 11, **dadurch gekennzeichnet, dass** der elektromagnetische Sauger kleinen Hubs (432) Einstelleinrichtungen aufweist, die es ermöglichen, die Höhe des kleinen Hubs des zylindrischen Stößels (412) einzustellen.

16. Elektrohydraulisches Ventil mit Kugelhub für die Hydraulikeinheit eines Motors mit variablem Verdichtungsverhältnis nach Anspruch 11, **dadurch gekennzeichnet, dass** der elektromagnetische Sauger gro0en Hubs (433) Einstelleinrichtungen aufweist, die es ermöglichen, die Höhe des großen Hubs des zylindrischen Stößels (412) einzustellen.

17. Elektrohydraulisches Ventil mit Kugelhub für die Hydraulikeinheit eines Motors mit variablem Verdichtungsverhältnis nach Anspruch 12, **dadurch gekennzeichnet, dass** die zylindrische Hülse (435) Einstelleinrichtungen aufweist, die es ermöglichen, den Abstand zwischen dem zylindrischen Stößel (412) und der Kugel (401, 402) einzustellen, wenn keiner der elektromagnetischen Sauger (432, 433) mit elektrischem Strom versorgt wird.
